# EUROPÄISCHE PATENTSCHRIFT

(11) **EP 1 430 088 B1**
(45) Veröffentlichungstag und Bekanntmachung des Hinweises auf die Patenterteilung: **22.10.2008**
(21) Anmeldenummer: 02777054.4
(22) Anmeldetag: 10.09.2002
(51) Int. Cl.: C08F 10/00, C08F 4/69

(54) **VERFAHREN ZUR POLYMERISATION VON OLEFINEN**
METHOD FOR THE POLYMERIZATION OF OLEFINS
PROCEDE DE POLYMERISATION D'OLEFINES

(30) Priorität: 14.09.2001 DE 10145454
(43) Veröffentlichungstag der Anmeldung: 23.06.2004
(73) Patentinhaber: Basell Polyolefine GmbH, 50389 Wesseling (DE)
(72) Erfinder: MIHAN, Sharam, 67061 Ludwigshafen (DE); DORER, Birgit, Bruxelles (BE); ENDERS, Markus, 69123 Heidelberg (DE); FERNANDEZ, Pablo, 69120 Heidelberg (DE)
(86) Internationale Anmeldenummer: PCT/EP2002/010130
(87) Internationale Veröffentlichungsnummer: WO 2003/025028

(56) Entgegenhaltungen:
- WO-A-01/12641
- WO-A-01/40330
- DE-A- 10 028 432
- US-B1- 6 177 376

## Beschreibung

Die vorliegende Erfindung betrifft die Verwendung eines Verfahrens zur Polymerisation von Olefinen mit einem Metallkomplex der Gruppen 3, 4, 5, 6, 7, 8, 9 oder 10 des Periodensystems, enthaltend mindestens eine Gruppe C=NR¹, C=PR¹, C=O, C=S oder ein heteroaromatisches Ringsystem, enthaltend mindestens ein Atom der Gruppen N, P, O oder S zur Steuerung der Breite der Molmassenverteilung.

Organoübergangsmetallverbindungen wie Metallocenkomplexe sind als Katalysatoren für die Olefinpolymerisation von großem Interesse, weil sich mit ihnen Polyolefine synthetisieren lassen, die mit herkömmlichen Ziegler-Natta-Katalysatoren nicht zugänglich sind. Beispielsweise führen solche Single-Site-Katalysatoren zu Polymeren mit einer engen Molmassenverteilung und einem einheitlichen Comonomereinbau. Ausser Bis(cyclopentadienyl)verbindungen werden auch sogenannte "constrained geometry" Katalysatoren eingesetzt. Dies sind zumeist Titankomplexe in der Oxidationsstufe 4 mit nur einem Cyclopentadienylsystem, wobei dieses über eine Brücke mit einem anionischen Amid verbunden ist, das ebenfalls an das Titanzentrum gebunden ist.

Durch die enge Molmassenverteilung können sich aber Probleme bei der Verarbeitung ergeben. Um dies zu vermeiden wurden Katalysatorsyteme mit zwei aktiven Katalysatorkomponenten entwickelt. So lässt sich eine Verbreiterung des Molekulargewichtes bis hin zu bimodalen Produkten erreichen. Bei den Katalysatorsystemen sind beispielsweise Kombinationen von zwei Metallocenen, einem Metallocen und einem Ziegler-Katalysator oder einem Metallocen und einem Chromkatalysator bekannt. Meistens werden diese beiden Katalysatorsysteme zusammen auf einem Trägermaterial aufgebracht. Damit ist das relative Verhältnis der beiden Katalysatoren zueinander festgelegt. Dies bedeutet das für verschiedenen Produkte jeweils verschiedene Katalysatorensysteme mit unterschiedlichen Katalysatorverhältnissen hergestellt werden müssen. Ein weiterer Nachteil diser Systeme ist, dass oftmals einer der beiden Katalysatoren empfindlicher auf geringe Mengen an Katalysatorgiften wirkt und so bei Anwesenheit von Verunreinigungen nur eines der Katalysatorsysteme vergiftet wird. Dies führt zu einer Veränderung der relativen Anteile die von dem jeweiligen Katalysator stammen und lässt sich nicht korrigieren.

Wir haben nun ein Verfahren gefunden, worin nur ein Katalysatorsystem eingesetzt wird und dass durch Zugabe eines weiteren Reagenzes in ein zweites Katalysatorsystem umgewandelt werden kann.

Demgemäss wurde die Verwendung eines Verfahrens zur Polymerisation von Olefinen in Anwesenheit eines Katalysatorsystems gefunden, enthaltend
A) einen Metallkomplex der Gruppen 3, 4, 5, 6, 7, 8, 9 oder 10 des Periodensystems, enthaltend mindestens eine. Gruppe C=E oder ein heteroaromatisches Ringsystem, enthaltend mindestens ein Atom der Gruppen N, P, O oder S, worin E oder mindestens ein Atom der Gruppen N, P, O oder S des heteroaromatisches Ringsystems, direkt an das Metall des Metallkomplexes gebunden ist, wobei
   - E: NR¹, PR¹, O oder S,
   - R¹: C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR²₃, wobei der organisch Rest R¹ auch durch Halogene substituiert sein kann und
   - R²: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R³ auch zu einem fünf- oder sechsgliedrigen Ring verbunden sein können, ist
B) optional einen organischen oder anorganischen Träger,
C) optional eine oder mehrere Kationenbildende Verbindungen und
D) optional eine oder mehrere Metallverbindungen der Gruppe 13 des Periodensystems,
dadurch gekennzeichnet, dass das Katalysatorsystem mit einer Verbindung der Formel F-I

M¹ (R³), A(R⁴)ₛA (F-I)

in der
- M¹: Li, Na, K, Be, Mg, Ca, Sr, Ba oder Zn bedeutet.
- R³: C₁-C₂₀-Alkyl, C₂-C₂₀-AlKenyl. C₈-C₂₀-Aryl, Alkylaryl mit 1 bis 10 C-Atomen im Alkylrest und 6-20 C-Atomen im Arylrest
- R⁴: Wasserstoff, Halogen, C₁-C₂₀-Alkyl, C₂-C-₂₀-Alkenyl, C₆-C₂₀-Aryl, Alkylaryl mit 1 bis 10 C-Atomen im Alkylrest und 6-20 C-Atomen im Arylrest oder Alkoxy mit jeweils 1 bis 10 C-Atomen im Alkylrest und 6 bis 20 C-Atomen im Arylrest,
- r^{A}: eine ganze Zahl von 1 bis 2
und
- s^{A}: eine Zahl von 0 oder 1 bedeutet, wobei die Summe r^{A}+s^{A} der Wertigkeit von M¹ entspricht,
umgesetzt wird
zur Steuerung der Breite der Molmassenverteilung Mw/Mn und/oder des Comonomereinbauverhaltens.

Außerdem betrifft die Erfindung die Verwendung des erfindungsgemässen Verfahrens zur Steuerung der Breite der Molmassenverteilung und/oder der Zusammensetzungsverteilung des Comonomergehaltes .

Der Metallkomplex A) enthält mindestens eine Gruppe C=E oder ein heteroaromatisches Ringsystem, enthaltend mindestens ein Atom der Gruppen N, P, O oder S. C=E kann beispielsweise eine Imino-, Keto-, Ester-, Thio- oder Thioester-Gruppe sein und ist, bevorzugt eine Imino-Gruppe.

Als C-organische Substituenten R¹ kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert.-Butyl, n-Pentyl, n-Hexyl, n-Heptyl, n-Octyl, n-Nonyl, h-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2.4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1- oder 2-Ethylphenyl, wobei gegebenenfalls der organische Rest R¹ auch durch Halogene, wie z.B. Fluor, Chlor oder Brom substituiert sein können. Als Si-organische Substituenten SiR²₃ kommen für R² die gleichen Reste, wie oben für R¹ näher ausgeführt, wobei gegebenenfalls auch zwei R² zu einem 5- oder 6-gliedrigen Ring verbunden sein können, in Betracht, wie z.B. Trimethylsilyl, Triethylsilyl, Butyldimethylsilyl, Tributylsilyl, Triallylsilyl, Triphenylsilyl oder Dimethylphenylsilyl. Bevorzugt Reste R¹ sind Methyl, Ethyl, n-Propyl, iso-Propyl, n-Butyl, iso-Butyl, tert.-Butyl, n-Pentyl, n-Hexyl, n-Heptyl, n-Octyl, Vinyl, Allyl, Benzyl, Phenyl, ortho Dialkyl- oder Dichlorosubstituierte Phenyle, Trialkyl- oder Trichlorosubstituierte Phenyle, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen.

Bevorzugte iminogruppen enthalten als R¹-Rest ein C₁-C₂₀-Alkyl, wobei das Alkyl linear oder verzweigt sein kann, wie z.B. Methylimin, Ethytimin, n-Propylimin, iso-Propylimin, n-Butylimin, iso-Butylimin, tert.-Butylimin, n-Pentylimin, n-Hexylimin, n-Heptylimin, n-Octylimin, n-Nonylimin, n-Decylimin oder n-Dodecylimin, ein 5- bis 7-gliedriges Cycloalkyl, das seinerseits eine C₆-C₁₀-Arylgruppe als Substituent tragen kann, wie z.B. Cyclopropanimin, Cyclobutanimin, Cyclopentanimin, Cyclohexanimin, Cycloheptanimin, Cyclooctanimin, Cyclononanimin oder Cyclododekanimin, ein C₆-C₂₀-Aryl, wobei der Arylrest durch weitere Alkylgruppen substituiert sein kann, wie z.B. Phenylimin, Naphthylimin, Biphenylimin, Anthranylimin, o-, m-, p-Methylphenylimin, 2,3-, 2,4-, 2,5-oder 2,6-Dimethylphenylimin, 2,3,4-, 2,3,5-, 2,3,6-, 2,4,5-, 2,4,6- oder 3,4,5-Trimethylphenylimin, oder ein Arylalkyl, wobei das Arylalkyl durch weitere Alkylgruppen substituiert sein kann, wie z.B. Benzylimin, o-, m-, p-Methylbenzylimin, 1- oder 2-Ethylphenylimin, wobei gegebenenfalls der organische Rest R¹ auch durch Halogene, wie z.B. Fluor, Chlor oder Brom substituiert sein können. Besonders bevorzugte Iminogruppen enthalten als R¹-Rest ein C₆-C₂₀-Aryl.

Der Metallkomplex A) kann auch ein heteroaromatisches Ringsystem, enthaltend mindestens ein Atom der Gruppen N, P, O oder S tragen. Das heteroaromatische Ringsystem kann dabei einzeln gebunden sein, einen Substituenten bilden oder an ein anderes Ligandsystem ankondensiert sein. Als Heteroaromaten, welche einzeln gebunden oder an ein anderes Ligandsystem ankondensiert sind bevorzugt Heteraromaten mit einer Ringgrösse von 5 oder 6 Ringatomen. Beispiele für 5-Ring Heterocyclen, welche neben Kohlenstoffatomen ein bis vier Stickstoffatome und/oder ein Schwefel- oder Sauerstoffatom als Ringglieder enthalten können, sind Furan, Thiophen, Pyrrol, Isoxazol, 3-Isothiazol, Pyrazol, Oxazol, Thiazol, Imidazol, 1,2,4-Oxadiazol, 1,2,5-Oxadiazol, 1,3,4-Oxadiazol, 1,2,3-Triazol oder 1,2,4-Triazol. Beispiele für 6-gliedrige Heteroarylgruppen, welche ein bis vier Stickstoffatome und/oder ein Phosphoratom enthalten können, sind Pyridin, Phosphabenzol, Pyridazin, Pyrimidin, Pyrazin, 1,3,5-Triazin, 1,2,4-Triazin oder 1,2,3-Triazin. Die 5-Ring und 6-Ring Heterocyclen können hierbei auch durch C₁-C₁₀-Alkyl, C₆-C₁₀Aryl, Alkylaryl mit 1 bis 10 C-Atomen im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind Indol, Indazol, Benzofuran, Benzothiophen, Benzothiazol, Benzoxazol oder Benzimidazol. Beispiele für benzokondensierte 6-gliedrige Heteroarylgruppen sind Chroman, Benzopyran, Chinolin, Isochinolin, Cinnolin, Phthalazin, Chinazolin, Chinoxalin, 1,10-Phenanthrolin oder Chinolizin. Bezeichnung und Nummerierung der Heterocyclen wurde aus Lettau, Chemie der Heterocyclen, 1. Auflage, VEB, Weinheim 1979 entnommen. Die Heterocyclen sind mit dem Cyclopentadienyl-Grundgerüst bevorzugt über eine C-C-Doppelbindung des Heterocyclus kondensiert. Heterocyclen mit einem Heteroatom sind bevorzugt 2,3- oder b- anneliert.

Als Heteroaromaten, welche einen Substituenten bilden können, kommen beispielsweise 5-Ring Heteroarylgruppen, welche neben Kohlenstoffatomen ein bis vier Stickstoffatome oder ein bis drei Stickstoffatome und/oder ein Schwefel- oder Sauerstoffatom als Ringglieder enthalten können, sind 2-Furyl, 2-Thienyl, 2-Pyrrolyl, 3-Isoxazolyl, 5-Isoxazolyl, 3-Isothiazolyl, 5-Isothiazolyl, 1-Pyrazolyl, 3-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 5-Imidazolyl, 1,2,4-Oxadiazol-3-yl, 1,2,4-Oxadiazol-5-yl, 1,3,4-Oxadiazol-2-yl oder 1,2,4-Triazol-3-yl in Betracht. Beispiele für 6-gliedrige Heteroarylgruppen, welche ein bis vier Stickstoffatome und/oder ein Phosphoratom enthalten können, sind 2-Pyridinyl, 2-Phosphabenzolyl 3-Pyridazinyl, 2-Pyrimidinyl, 4-Pyrimidinyl, 2-Pyrazinyl, 1,3,5-Triazin-2-yl und 1,2,4-Triazin-3-yl, 1,2,4-Triazin-5-yl oder 1,2,4-Triazin-6-yl. Die 5-Ring und 6-Ring Heteroarylgruppen können hierbei auch durch C₁-C₁₀-Alkyl, C₆-C₁₀-Aryl, Alkylaryl mit 1 bis 10 C-Atomen im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind 2-Indolyl, 7-Indolyl, 2-Cumaronyl, 7-Cumaronyl, 2-Thionaphthenyl, 7-Thionaphthenyl, 3-Indazolyl, 7-Indazolyl, 2-Benzimidazolyl oder 7-Benzimidazolyl. Beispiele für benzokondensierte 6-gliedrige Heteroarylgruppen sind 2-Chinolyl, 8-Chinolyl, 3-Cinnolyl, 8-Cinnolyl, 1-Phthalazyl, 2-Chinazolyl, 4-Chinazolyl, 8-Chinazolyl, 5-Chinoxalyl, 4-Acridyl, 1-Phenanthridyl oder 1-Phenazyl. Von diesen heteroaromatischen Systemen sind besonders substituiertes und unsubstituiertes 2-Pyridyl und 8-Chinolyl bevorzugt.

Bevorzugt sind Metallkomplexe A) worin E oder mindestens ein Atom der Gruppen N, P, O oder S des heteroaromatisches Ringsystems, direkt an das Metall des Metallkomplexes gebunden ist.

An das Metallatom im Metallkomplex können ausserdem noch weitere Liganden gebunden sein. Die Anzahl weiterer Liganden hängt beispielsweise von der Oxidationsstufe des Metallatoms ab. Geeignet sind mono- und dianionische Liganden wie sie beispielsweise für X beschrieben sind. Zusätzlich können auch noch Lewisbasen wie beispielsweise Amine, Ether, Ketone, Aldehyde, Ester, Sulfide oder Phosphine an das Metallzentrum gebunden sein.

Bevorzugt sind die Gruppe C=E oder das heteroaromatische Ringsystem, enthaltend mindestens ein Atom der Gruppen N, P, O oder S mit einem Cyclopentadienylsystem verbunden.

Geignete Metallkomplexe sind beispielsweise Metallocene, mit mindestens einem Liganden, der aus einem Cyclopentadienyl oder Heterocyclopentadienyl mit einem ankondensierten Heteroaromat gebildet wird, wobei die Heteroaromaten bevorzugt Stickstoff und/oder Schwefel enthalten. Derartige Verbindungen sind beispielsweise in der WO 98/22486 beschrieben. Dies sind insbesondere Dimethylsilandiyl-(2-methyl-4-phenyl-indenyl)-(2,5-dimethyl-N-phenyl-4-azapentalen)-zirkoniumdichlorid, Dimethylsilandiylbis(2-methyl-4-phenyl-4-hydroazulenyl)zirkoniumdichlorid oder Dimethylsilandiylbis(2-ethyl-4-phenyl-4-hydroazulenyl)zirkonium-dichlorid.

Bevorzugt werden Metallkomplexe A) der allgemeinen Formel (Cp)(-Zₘ-A)MXₖ verwendet, worin die Variablen folgende Bedeutung haben:
- Cp: ein Cyclopentadienyl-System
- Z: eine divalente Brücke zwischen A und Cp
- A: C=NR⁵, oder ein unsubstituiertes, substituiertes oder kondensiertes, heteroaromatisches Ringsystem,
- M: ein Metall der Gruppen 3, 4, 5 oder 6 des Periodensystems
- X: unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR⁶R⁷, OR⁶, SR⁶, SO₃R⁶, OC(O)R⁶, BF₄-, PF₆-, oder sperrige nichtkoordinierende Anionen,
- R⁵-R⁷: unabhängig voneinander C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR⁸₃, wobei die organischen Reste R⁵-R⁷ auch durch Halogene substituiert sein können und je zwei Reste R⁵-R⁷ auch zu einem fünf- oder sechsgliedrigen Ring verbunden sein können,
- R⁸: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 Atomen im Arylrest und je zwei Reste R⁸ auch zu einem fünf- oder sechsgliedrigen Ring verbunden sein können,
- k: 1, 2, oder 3 und
- m: 1 ist, oder wenn A ein heteroaromatisches Ringsystem ist, auch 0 sein kann.

Cp ist ein Cyclopentadienyl-System oder ein Cyclopentadienylsystem mit mindestens einem kondensierten Heterocyclus. Als Cyclopentadienyl gilt im folgenden ein C₅-Ringsystem mit 6 π-Elektronen, wobei eines der Kohlenstoffatome auch durch Stickstoff oder Phosphor, bevorzugt Phosphor ersetzt sein kann. Bevorzugt werden C₅-Ringsysteme ohne Ersatz durch ein Heteroatom verwendet. An dieses Cyclopentadienyl-Grundgerüst kann auch ein Heteroaromat ankondesiert sein, welcher mindestens ein Atom der Gruppe N,P,O oder S enthält. Ankondensiert bedeutet hierin, dass der Heteroaromat und das Cyclopentadienylgerüst zwei Atome, bevorzugt Kohlenstoffatome gemeinsam haben. Bevorzugt sind Cyclopentadienylsysteme Cp der Formel (F-II) 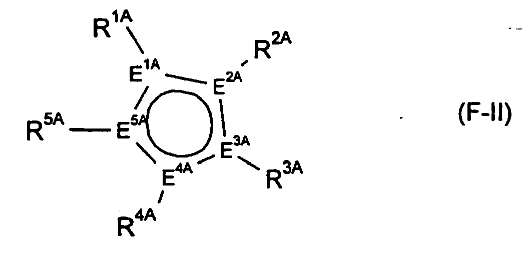 worin die Variablen folgende Bedeutung besitzen:
- E^{1A}-E^{5A}: Kohlenstoff oder maximal ein E^{1A} bis E^{5A} Phosphor oder Stickstoff,
- R^{1A}-R^{5A}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR^{6A}₃, wobei 1 organischer Reste R^{1A}-R^{5A} gleich -Z-A oder A ist und wobei die organischen Reste R^{1A}-R^{5A} auch durch Halogene substituiert sein können und je zwei vicinale Reste R^{1A}-R^{5A} auch zu einem fünf- oder sechsgliedrigen Ring verbunden sein können, und/oder dass zwei vicinale Reste R^{1A}-R^{5A} zu einem Heteroaromat verbunden sind, welcher mindestens ein Atom aus der Gruppe N, P,O oder S enthält und
- R^{6A}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R^{6A} auch zu einem fünf oder sechsgliedrigen Ring verbunden sein können.

In bevorzugten Cyclopentadienylsystemen Cp sind alle E^{1A} bis E^{5A} Kohlenstoff.

Zwei vicinale Reste R^{1A}-R^{5A} können einen Heteroaromaten bilden, welcher mindestens ein Atom aus der Gruppe Stickstoff, Phosphor, Sauerstoff und/oder Schwefel, besonders bevorzugt Stickstoff und/oder Schwefel enthält. Bevorzugt sind Heteraromaten mit einer Ringgrösse von 5 oder 6 Ringatomen. Beispiele für 5-Ring Heteroaromaten, welche neben Kohlenstoffatomen ein bis vier Stickstoffatome und/oder ein Schwefel- oder Sauerstoffatom als Ringglieder enthalten können, sind Furan, Thiophen, Pyrrol, Isoxazol, 3-Isothiazol, Pyrazol, Oxazol, Thiazol, Imidazol, 1,2,4-Oxadiazol, 1,2,5-Oxadiazol, 1,3,4-Oxadiazol, 1,2,3-Triazol oder 1,2,4-Triazol. Beispiele für 6-gliedrige Heteroarylgruppen, welche ein bis vier Stickstoffatome und/oder ein Phosphoratom enthalten können, sind Pyridin, Phosphabenzol, Pyridazin, Pyrimidin, Pyrazin, 1,3,5-Triazin, 1,2,4-Triazin oder 1,2,3-Triazin. Die 5-Ring und 6-Ring Heteroaromaten können hierbei auch durch C₁-C₁₀-Alkyl, C₆-C₁₀-Aryl, Alkylaryl mit 1 bis 10 C-Atomen im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind Indol, Indazol, Benzofuran, Benzothiophen, Benzothiazol, Benzoxazol oder Benzimidazol. Beispiele für benzokondensierte 6-gliedrige Heteroarylgruppen sind Chroman, Benzopyran, Chinolin, Isochinolin, Cinnolin, Phthalazin, Chinazolin, Chinoxalin, 1,10-Phenanthrolin oder Chinolizin. Bezeichnung und Nummerierung der Heteroaromaten wurde aus Lettau, Chemie der Heterocyclen, 1. Auflage, VEB, Weinheim 1979 entnommen. Die Heteroaromaten sind mit dem Cyclopentadienyl-Grundgerüst bevorzugt über eine C-C-Doppelbindung des Heterocyclus kondensiert. Heterocyclen mit einem Heteroatom sind bevorzugt 2,3- oder b- anneliert.

Cyclopentadienylsytemen Cp mit einem kondensierten Heteroaromaten sind beispielsweise Thiapentalen, 2-Methylthiapentalen, 2-Ethylthiapentalen, 2-Isopropylthiapentalen, 2-n-Butylthiapentalen, 2-tert.-Butylthiapentalen, 2-Trimethylsilylthiapentalen, 2-Phenylthiapentalen, 2-Naphthylthiapentalen, 3- Methylthiopentalen, 4-Phenyl-2,6-dimethyl-1-thiopentalen, 4-Phenyl-2,6-diethyl-1-thiopentalen, 4-Phenyl-2,6-diisopropyl-1-thiopentalen, 4-Phenyl-2,6-di-n-butyl-1-thiopentalen, 4-Phenyl-2,6-di-trimethylsilyl-1-thiopentalen, Azapentalen, 2-Methylazapentalen, 2-Ethylaiapentalen, 2-Isopropylazapentalen, 2-n-Butylazapentalen, 2-Trimethylsilylazapentalen, 2-Phenylazapentalen, 2-Naphthylazapentalen, 1-Phenyl-2,5-dimethyl-1-azapentalen, 1-Phenyl-2,5-diethyl-1-azapentalen, 1-Phenyl-2,5-di-n-butyl-1-azapentalen, 1-Phenyl-2,5-di-tert-butyl-1-azapentalen, 1-Phenyl-2,5-di-trimethylsilyl-1-azapentalen, 1-tert.Butyl-2,5-dimethyl-1-azapentalen, Oxapentalen, Phosphapentalen, 1-Phenyl-2,5-dimethyl-1-phosphapentalen, 1-Phenyl-2,5-diethyl-1-phosphapentalen, 1-Phenyl-2,5-di-n-butyl-1-phosphapentalen, 1-Phenyl-2,5-di-tert.-butyl-1-phosphapentalen, 1-Phenyl-2,5-di-trimethylsilyl-1-phosphapentalen, 1-Methyl-2,5-dimethyl-1-phosphapentalen, 1-tert.Butyl-2,5-dimethyl-1-phosphapentalen, 7-Cyclopenta-[1,2]thiophen[3,4]cyclopentadiene oder 7-Cyclopenta[1,2]pyrrol[3,4]cyclopentadiene.

In weiteren bevorzugten Cyclopentadienylsytemen Cp bilden vier der Reste R^{1A}-R^{5A}, also zweimal je zwei vicinale Reste zusammen, zwei Heteroaromaten aus. Die heteroaromatischen Systeme sind gleich wie weiter oben näher ausgeführt. Cyclopentadienylsytemen HCp mit zwei kondensierten Heterocyclen sind beispielsweise 7-Cyclopentadithiophen, 7-Cyclopentadipyrrol oder 7-Cyclopentadiphosphol.

Die Synthese derartiger Cyclopentadienylsyteme Cp ist beispielsweise in der Eingangs erwähnten WO 98/22486 beschrieben. In "metalorganic catalysts for synthesis and polymerisation" , Springer Verlag 1999, sind von Ewen et al., S.150 ff weitere Synthesen von Cyclopentadienylsytemen Cp beschrieben.

Durch die Variation der Substituenten R^{1A}-R^{5A}, kann ebenfalls Einfluss auf das Polymerisationsverhalten der Metallkomplexe genommen werden. Durch die Zahl und Art der Substituenten kann die Zugänglichkeit des Metallatoms M für die zu polymerisierenden Olefine beeinflußt werden. So ist es möglich die Aktivität und Selektivität des Katalysators hinsichtlich verschiedener Monomerer, insbesondere sterisch anspruchsvoller Monomerer, zu modifizieren. Da die Substituenten auch auf die Geschwindigkeit von Abbruchreaktionen der wachsenden Polymerkette Einfluß nehmen können, läßt sich hierdurch auch das Molekulargewicht der entstehenden Polymere verändern. Die chemische Struktur der Substituenten R^{1A} bis R^{5A} kann daher in weiten Bereichen variiert werden, um die gewünschten Ergebnisse zu erzielen und ein maßgeschneidertes Katalysatorsystem zu erhalten, wobei 1 organischer Reste R^{1A}-R^{5A} gleich -Z-A oder A ist. Als C-organische Substituenten R^{1A}-R^{5A} kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert-Butyl, n-Pentyl, n-Hexyl, n-Heptyl, n-Octyl, n-Nonyl, n-Decyl oder n-Dodecyl, 5-bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann; wie z.B. Benzyl, o-, m-, p-Methylbenzyl, 1- oder 2-Ethylphenyl, wobei gegebenenfalls auch zwei R^{1A} bis R^{5A} zu einem 5- oder 6-gliedrigen Ring verbunden sein können und die organischen Reste R^{1A}-R^{5A} auch durch Halogene, wie z.B. Fluor, Chlor oder Brom substituiert sein können. Als Si-organische Substituenten SiR^{6A}₃ kommen für R^{6A} die gleichen Reste, wie oben für R^{1A}-R^{5A} näher ausgeführt, wobei gegebenenfalls auch zwei R^{6A} zu einem 5- oder 6-gliedrigen Ring verbunden sein können, in Betracht, wie z.B. Trimethylsilyl, Triethylsilyl, Butyldimethylsilyl, Tributylsilyl, Triallylsilyl, Triphenylsilyl oder Dimethylphenylsilyl. Bevorzugt Reste R^{1A}-R^{5A} sind Wasserstoff, Methyl, Ethyl, n-Propyl, iso-Propyl, n-Butyl, iso-Butyl, tert.-Butyl, n-Pentyl, n-Hexyl, n-Heptyl, n-Octyl, Vinyl, Allyl, Benzyl, Phenyl, ortho Dialkyl- oder Dichlorosubstituierte Phenyle, Trialkyl- oder Trichlorosubstituierte Phenyle, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen. Des weiteren sind auch solche Verbindungen bevorzugt in denen zusätzlich zwei vicinale Reste R^{1A}-R^{5A} ein cyclisches kondensiertes Ringsystem ausbilden, also zusammen mit dem E^{1A}-E^{5A}-, bevorzugt C₅-Cyclopentadienyl-Grundgerüst z.B. ein unsubstituiertes oder substituiertes Indenyl-, Benzindenyl- oder Tetrahydroindenylsystem bilden.

Wie bei den Metallocenen können auch die Metallkomplexe chiral sein. So kann einerseits einer der Substituenten R^{1A}-R^{5A} des Cyclopentadienyl-Grundgerüstes ein oder mehrere chirale Zentren besitzen, oder aber das Cyclopentadienylsystem Cp selbst kann enantiotop sein, so daß erst durch dessen Bindung an das Übergangsmetall M die Chiralität induziert wird (zum Formalismus der Chiralität bei Cyclopentadienylverbindungen siehe R. Halterman, Chem. Rev. 92, (1992), 965-994).

M ist ein Metall der Gruppen 3, 4, 5 oder 6 des Periodensystems, wie beispielsweise Scandium, Yttrium, Titan, Zirkon, Hafnium, Vanadium, Tantal, Chrom, Molybdän oder Wolfram. Ganz besonders bevorzugt ist M Titan oder Chrom. Die Metallkomplexe, insbesondere die Chromkomplexe, lassen sich auf einfache Weise erhalten, wenn man die entsprechenden Metallsalze wie z.B. Metallchloride mit dem Ligandanion umsetzt (z.B. analog zu den Beispielen in DE 197 10615).

Die Liganden X ergeben sich z.B. durch die Auswahl der entsprechenden Metallausgangsverbindungen, die zur Synthese der Metallkomplexe verwendet werden, können aber auch nachträglich noch variiert werden. Als Liganden X kommen insbesondere die Halogene wie Fluor, Chlor, Brom oder Jod und darunter insbesondere Chlor in Betracht. Auch Alkylreste, wie Methyl, Ethyl, Propyl, Butyl, Vinyl, Allyl, Phenyl oder Benzyl stellen vorteilhafte Liganden X dar. Als weitere Liganden X sollen nur exemplarisch und keineswegs abschließend Trifluoracetat, BF₄⁻, PF₆⁻ sowie schwach bzw. nicht koordinierende Anionen (siehe z.B. S. Strauss in Chem. Rev. 1993, 93, 927-942) wie B(C₆F₅)₄⁻ genannt werden.

Auch Amide, Alkoholate und Sulfonate sind besonders geeignete Liganden X. Durch Variation der Reste R⁶ und R⁷ können z.B. physikalische Eigenschaften wie Löslichkeit fein eingestellt werden. Als C-organische Substituenten R⁶-R⁷ kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert.-Butyl, n-Pentyl, n-Hexyl, n-Heptyl, n-Octyl, n-Nonyl, n-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1- oder 2-Ethylphenyl, wobei gegebenenfalls auch R⁶ mit R⁷ zu einem 5- oder 6-gliedrigen Ring verbunden sein können und die organischen Reste R⁶-R⁷ auch durch Halogene, wie z.B. Fluor, Chlor oder Brom substituiert sein können. Als Si-organische Substituenten SiR⁸₃ kommen für R⁸ die gleichen Reste, wie oben für R⁶-R⁷ näher ausgeführt, wobei gegebenenfalls auch zwei R⁸ zu einem 5- oder 6-gliedrigen Ring verbunden sein können, in Betracht, wie z.B. Trimethylsilyl, Triethylsilyl, Butyldimethylsilyl, Tributylsilyl, Triallylsilyl, Triphenylsilyl oder Dimethylphenylsilyl. Bevorzugt werden C₁-C₁₀-Alkyl wie Methyl, Ethyl, n-Propyl, n-Butyl, tert.-Butyl, n-Pentyl, n-Hexyl, n-Heptyl, n-Octyl, sowie Vinyl, Allyl, Benzyl und Phenyl als Reste R⁶ und R⁷ verwendet. Manche dieser substituierten Liganden X werden ganz besonders bevorzugt verwendet, da sie aus billigen und einfach zugänglichen Ausgangsstoffen erhältlich sind. So ist eine besonders bevorzugte Ausführungsform, wenn X für Dimethylamid, Methanolat, Ethanolat, Isopropanolat, Phenolat, Naphtholat, Triflat oder p-Toluolsulfonat steht.

Die Anzahl k der Liganden X hängt von der Oxidationsstufe des Übergangsmetalles M ab. Die Zahl k kann somit nicht allgemein angegeben werden. Die Oxidationsstufe der Übergangsmetalle M in katalytisch aktiven Komplexen, sind dem Fachmann zumeist bekannt. Chrom, Molybdän und Wolfram liegen sehr wahrscheinlich in der Oxidationsstufe +3 vor. Es können jedoch auch Komplexe eingesetzt werden, deren Oxidationsstufe nicht der des aktiven Katalysators entspricht. Solche Komplexe können dann durch geeignete Aktivatoren entsprechend reduziert oder oxidiert werden. Bevorzugt werden Chromkomplexe in der Oxidationsstufe +3 und Titankomplexe in der Oxidationsstufe 3 oder 4 verwendet.

A kann eine Iminogruppe C=NR⁵, oder ein unsubstituiertes, substituiertes oder kondensiertes, heteroaromatisches Ringsystem sein. Bevorzugte Iminogruppen enthalten als R⁵-Rest ein C₁-C₂₀-Alkyl, wobei das Alkyl linear oder verzweigt sein kann, wie z.B. Methylimin, Ethylimin, n-Propylimin, iso-Propylimin, n-Butylimin, iso-Butylimin, tert-Butylimin, n-Pentylimin, n-Hexylimin, n-Heptylimin, n-Octylimin, n-Nonylimin, n-Decylimin oder n-Dodecylimin, ein 5- bis 7-gliedriges Cycloalkyl, das seinerseits eine C₆-C₁₀-Arylgruppe als Substituent tragen kann, wie z.B. Cyclopropanimin, Cyclobutanimin, Cyclopentanimin, Cyclohexanimin, Cycloheptanimin, Cyclooctanimin, Cyclononanimin oder Cyclododekanimin, ein C₆-C₂₀-Aryl, wobei der Arylrest durch weitere Alkylgruppen substituiert sein kann, wie z.B. Phenylimin, Naphthylimin, Biphenylimin, Anthranylimin, o-, m-, p-Methylphenylimin, 2,3-, 2,4-, 2,5-, oder 2,6-Dimethylphenylimin, 2,3,4-, 2,3,5-, 2,3,6-, 2,4,5-, 2,4,6- oder 3,4,5-Trimethylphenylimin, oder ein Arylalkyl, wobei das Arylalkyl durch weitere Alkylgruppen substituiert sein kann, wie z.B. Benzylimin, o-, m-, p-Methylbenzylimin, 1- oder 2-Ethylphenylimin, wobei gegebenenfalls der organische Rest R¹ auch durch Halogene, wie z.B. Fluor, Chlor oder Brom substituiert sein können. Besonders bevorzugte Iminogruppen enthalten als R⁵-Rest ein C₆-C₂₀-Aryl.

Bevorzugt ist A ein unsubstituiertes, substituiertes oder kondensiertes, heteroaromatisches Ringsystem darstellen, welches neben Kohlenstoffringgliedern Heteroatome aus der Gruppe Sauerstoff, Schwefel, Stickstoff und Phosphor enthalten kann. Beispiele für 5-Ring Heteroarylgruppen, welche neben Kohlenstoffatomen ein bis vier Stickstoffatome oder ein bis drei Stickstoffatome und/oder ein Schwefel- oder Sauerstoffatom als Ringglieder enthalten können, sind 2-Furyl, 2-Thienyl, 2-Pyrrolyl, 3-Isoxazolyl, 5-Isoxazolyl, 3-Isothiazolyl, 5-Isothiazolyl, 1-Pyrazolyl, 3-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 5-Imidazolyl, 1,2,4-Oxadiazol-3-yl, 1,2,4-Oxadiazol-5-yl, 1,3,4-Oxadiazol-2-yl oder 1,2,4-Triazol-3-yl. Beispiele für 6-gliedrige Heteroarylgruppen, welche ein bis vier Stickstoffatome und/oder ein Phosphoratom enthalten können, sind 2-Pyridinyl, 2-Phosphabenzolyl 3-Pyridazinyl, 2-Pyrimidinyl, 4-Pyrimidinyl, 2-Pyrazinyl, 1,3,5-Triazin-2-yl und 1,2,4-Triazin-3-yl, 1,2,4-Triazin-5-yl oder 1,2,4-Triazin-6-yl. Die 5-Ring und 6-Ring Heteroarylgruppen können hierbei auch durch C₁-C₁₀-Alkyl, C₆-C₁₀-Aryl, Alkylaryl mit 1 bis 10 C-Atomen im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind 2-Indolyl, 7-Indolyl, 2-Cumaronyl, 7-Cumaronyl, 2-Thionaphthenyl, 7-Thionaphthenyl, 3-Indazolyl, 7-Indazolyl, 2-Benzimidazolyl oder 7-Benzimidazolyl. Beispiele für benzokondensierte gliedrige Heteroarylgruppen sind 2-Chinolyl, 8-Chinolyl, 3-Cinnolyl, 8-Cinnolyl, 1-Phthalazyl, 2-Chinazolyl, 4-Chinazolyl, 8-Chinazolyl, 5-Chinoxalyl, 4-Acridyl, 1-Phenanthridyl oder 1-Phenazyl. Von diesen heteroaromatischen Systemen sind besonders substituiertes und unsubstituiertes 2-Pyridyl und 8-Chinolyl bevorzugt.

Die Verbrückung Z zwischen dem Cyclopentadienylsystem Cp und der funktionellen Gruppe A ist ein organisches Diradikal, bestehend aus Kohlenstoff und/oder Silizium Einheiten mit einer Kettenlänge von 1 bis 5. Z kann dabei an das Cyclopentadienyl-Grundgerüst oder an den Heterocyclus gebunden sein. Bevorzugt ist Z and das Cyclopentadienyl-Grundgerüst gebunden. Durch eine Änderung der Verknüpfungslänge zwischen Cyclopentadienylsystem und Heteroatom-Donor A kann die Aktivität des Katalysators beeinflußt werden. Bevorzugte Z sind 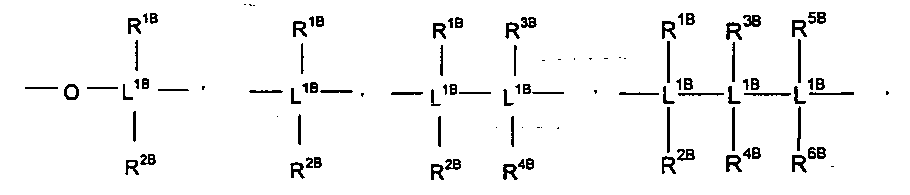 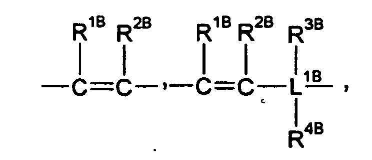 = BR^{1B},= BNR^{1B}R^{2B}, = AIR^{1B}, -Ge-, -Sn-, -O-**,** -S-, = SO, = SO₂, = NR^{1B}, = CO, = PR^{1B} oder = P(O)R^{1B} ist,
wobei
- R^{1B}-R^{6B}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR^{7B}₃, wobei die organischen Reste R^{1B}-R^{6B} auch durch Halogene substituiert sein können und je zwei Reste R^{1B}-R^{6B} auch zu einem fünf- oder sechsgliedrigen Ring verbunden sein können,
- R^{7B}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R^{7B} auch zu einem fünf- oder sechsgliedrigen Ring verbunden sein können und
- L^{1B}: Kohlenstoff, Silicium oder Germanium, bevorzugt Kohlenstoff oder Silicium ist,

Als Substituenten R^{1B} bis R^{6B} kommen die gleichen Reste, wie für R¹ beschrieben und Wasserstoff in Betracht, wobei gegebenenfalls auch zwei geminale oder vicinale Reste R^{1B} bis R^{6B} zu einem 5- oder 6-gliedrigen Ring verbunden sein können und auch durch Halogene, wie Fluor, Chlor oder Brom substituiert sein können. Bevorzugte Reste R^{1B} bis R^{6B} sind Wasserstoff, Methyl, Ethyl, n-Propyl, iso-Propyl, n-Butyl, tert.-Butyl, n-Pentyl, n-Hexyl, n-Heptyl, n-Octyl, Vinyl, Allyl, Benzyl, Phenyl, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen.

In bevorzugten Monocyclopentadienylkomplexen A) bilden das Cyclopentadienylsystem Cp und -Z-A- einen Liganden (Cp)(-Zₘ-A) der Formel F-III:

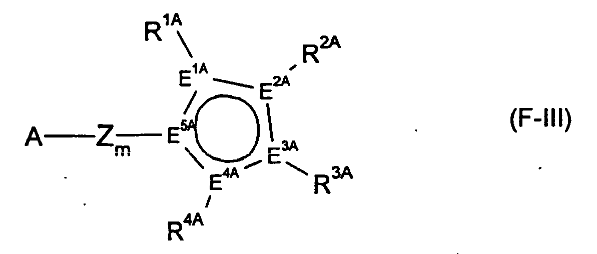

Worin die Variablen A, Z, m, E^{1A} bis E^{5A} und R^{6A} die obige Bedeutung besitzen und auch deren bevorzugte Ausführungsformen hierin bevorzugt sind und
- R^{1A}-R^{5A}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR^{6A}3, wobei die organischen Reste R^{1A}-R^{5A} auch durch Halogene substituiert sein können und je zwei vicinale Reste R^{1A}-R^{5A} auch zu einem fünf- oder sechsgliedrigen Ring verbunden sein können, und/oder dass zwei vicinale Reste R^{1A}-R^{5A} zu einem Heteroaromat verbunden sind, welcher mindestens ein Atom aus der Gruppe N, P,O oder S enthält.

Für R^{1A}-R^{5A} gelten ebefalls die weiter oben beschriebenen Ausführungen und die bevorzugten Ausführungsformen.

Eine weitere bevorzugte Ausführungsform dieser Metallkomplexe, sind diejenigen, worin
- A: ein unsubstituiertes, substituiertes oder kondensiertes, heteroaromatisches Ringsystem und
- Z: 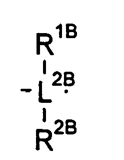 ist, wobei
L^{2B} unahängig voneinander Kohlenstoff oder Silizium bedeutet,
R^{1B}-R^{2B} unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Aryl-rest oder SiR^{7B}₃ bedeutet, wobei die organischen Reste R^{1B}-R^{2B} auch durch Halogene substituiert sein können und je zwei Reste R^{1B}-R^{2B} auch zu einem fünf oder sechsgliedrigen Ring verbunden sein können und
R^{7B} unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{7B} auch zu einem fünf- oder sechsgliedrigen Ring verbunden sein können und
- m: 0 oder 1 ist.

Die weiter oben aufgeführten Ausführungsformen und bevorzugten Ausführungsformen für R^{1B}-R^{2B} und R^{7B} gelten auch für diese bevorzugten Metallkomplexe.

Besonders bevorzugt im dem efindungsgemässen Verfahren sind Metallkomplexe A) der allgemeinen Formel (Cp)(-Zₘ-A)MXₖ, worin A ausgewählt ist aus der Gruppe
wobei 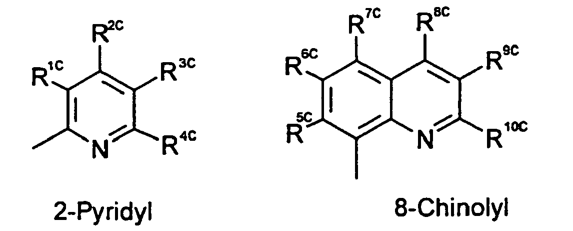
- R^{1C}-R^{10C}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{11c}₃ bedeutet, wobei die organischen Reste R^{1C}-R^{10C} auch durch Halogene substituiert sein können und je zwei vicinale Reste R^{1C}-R^{10C} auch zu einem fünf- oder sechsgliedrigen Ring verbunden sein können und
- R^{11C}: unabhängig voneinander Wasserstoff, C₁-C₂₀-Alkyl, C₂-C₂₀-Alkenyl, C₆-C₂₀-Aryl oder Alkylaryl-mit 1 bis 10 C-Atomen im Alkylrest und 6-20 C-Atomen im Arylrest bedeutet und je zwei Reste R^{11C} auch zu einem fünf- oder sechsgliedrigen Ring verbunden sein können.

Insbesondere ist in diesen Metallkomplexen A) m gleich 0 für 8-Chinolyl und m gleich 1 für 2-Pyridyl.

Als Substituenten R^{1C} bis R^{10C} kommen die gleichen Reste, wie für R^{1A} beschrieben in Betracht, wobei gegebenenfalls auch zwei vicinale Reste R^{1C} bis R^{10C} zu einem 5- oder 6-gliedrigen Ring verbunden sein können und auch durch Halogene, wie Fluor, Chlor oder Brom substituiert sein können. Bevorzugte Reste R^{1C} bis R^{10C} sind Wasserstoff, Methyl, Ethyl, n-Propyl, iso-Propyl, n-Butyl, tert-Butyl, n-Pentyl, n-Hexyl, n-Heptyl, n-Octyl, Benzyl, Phenyl, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen.

Ganz besonders einfach zugänglich und damit bevorzugte Metallkomplexe sind auch solche ohne Brücke Z, bei denen m gleich 0 ist und A ein unsubstituiertes oder substituiertes 8-Chinolyl. Bevorzugt ist in diesen Komplexen R^{5C} bis R^{10C} gleich Wasserstoff, oder R^{5C} bis R^{9C} ein Wasserstoff und R^{10C} Methyl, Ethyl, n-Propyl, iso-Propyl, n-Butyl, tert.-Butyl, n-Pentyl, n-Hexyl, n-Heptyl, n-Octyl, Benzyl, Phenyl, Naphthyl, Biphenyl oder Anthranyl. Diese sind einfach darstellbar und liefern gleichzeitig sehr hohe Aktivitäten.

In einer bevorzugten Ausführungsform ist M hierbei Chrom. Ganz besonders bevorzugt ist A ein unsubstituiertes oder substituiertes, z.B. alkylsubstituiertes, insbesondere in Position 8 verknüpftes Chinolyl, z.B. 8-Chinolyl, 8-(2-Methylchinolyl), 8-(2,3,4-Trimethylchinolyl) oder 8-(2,3,4,5.6,7-Hexamethylchinolyl). Bevorzugte Metallkomplexe dieser Art sind 1-(8-Chinolyl)-2-methyl-4-methylcyclopentadienylchrom(III)dichlorid, 1-(8-Chinolyl)-3-isopropyl-5-methylcyclopentadienylchrom(III)dichlorid, 1-(8-Chinolyl)-3-tert. butyl-5-methylcyclopentadienylchrom(III)dichlorid, 1-(8-Chinolyl)-2,3,4,5-tetramethylcyclopentadienylchrom(III)dichlorid, 1-(8-Chinolyl)tetrahydroindenylchrom(III)dichlorid, 1-(8-Chinolyl)indenylchrom(III)dichlorid, 1-(8-Chinolyl)-2-methylindenylchrom(III)dichlorid, 1-(8-Chinolyl)-2-isopropylindenylchrom(III)dichlorid, 1-(8-Chinolyl)-2-ethylindenylchrom(III)dichlorid, 1-(8-Chinolyl)-2-tert.butylindenylchrom(III)dichlorid, 1-(8-Chinolyl)-benzindenylchrom(III)dichlorid, 1-(8-Chinolyl)-2-methylbenzindenylchrom(III)dichlorid, 1-(8-(2-Methylchinolyl))-2-methyl-4-methylcyclopentadienylchrom(III)dichlorid, 1-(8-(2-Methylchinolyl))-2,3,4,5-tetramethylcyclopentadienylchrom(III)dichlorid, 1-(8-(2-Methylchinolyl))tetrahydroindenylchrom(III)dichlorid, 1-(8-(2-Methylchinolyl))indenylchrom(III)dichlorid, 1-(8-(2-Methylchinolyl))-2-methylindenylchrom(III)dichlorid, 1-(8-(2-Methylchinolyl))-2-isopropylindenylchrom(III)dichlorid, 1-(8-(2-Methylchinolyl))-2-ethylindenylchrom(III)dichlorid, 1-(8-(2-Methylchinolyl))-2-tert.butylindenylchrom(III)dichlorid, 1-(8-(2-Methylchinolyl))-benzindenylchrom(III)dichlorid oder 1-(8-(2-Methylchinolyl))-2-methylbenzindenylchrom(III)dichlorid.

Die Herstellung derartiger funktioneller Cyclopentadienyl-Liganden ist seit langer Zeit bekannt. Verschiedene Synthesewege für diese Komplexliganden werden z.B. von M. Enders et. al. in Chem. Ber. (1996), 129, 459-463 oder P. Jutzi und U. Siemeling in J. Orgmet. Chem. (1995), 500, 175-185 beschrieben.

Die Metallkomplexe, insbesondere die Chromkomplexe, lassen sich auf einfache Weise erhalten, wenn man die entsprechenden Metallsalze wie z.B. Metallchloride mit dem Ligandanion umsetzt (z.B. analog zu den Beispielen in DE-A-19710615).

Geeignete Metallkomplexe sind weiterhin zum Beispiel Übergangsmetallkomplexe mit mindestens einem Liganden der allgemeinen Formeln F XV bis F XIX, 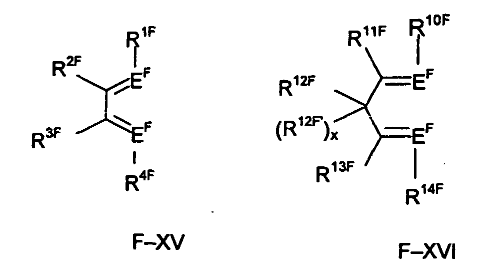 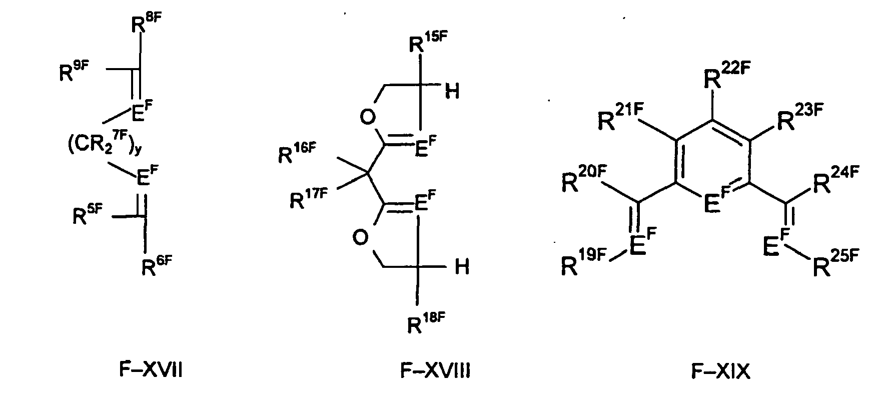 wobei das Übergangsmetall ausgewählt ist aus den Elementen Ti, Zr, Hf, Sc, V, Nb, Ta, Cr, Mo, W, Fe, Co, Ni, Pd, Pt oder ein Element der Seltenerd-Metalle. Bevorzugt sind hierbei Verbindungen mit Nickel, Eisen, Kobalt und Palladium als Zentralmetall.

E^{F} ist ein Element der 15. Gruppe des Periodensystems der Elemente bevorzugt N oder P, wobei N besonders bevorzugt ist. Die zwei oder drei Atome E^{F} in einem Molekül können dabei gleich oder verschieden sein.

Die Reste R^{1F} bis R^{25F}, die innerhalb eines Ligandsystems F-XV bis F-XIX gleich oder verschieden sein können, stehen dabei für folgende Gruppen:
- R^{1F} und R^{4F}: unabhängig voneinander für Kohlenwasserstoff- oder substituierte Kohlenwasserstoffreste, bevorzugt sind dabei Kohlenwasserstoffreste bei denen das dem Element E^{F} benachbarte Kohlenstoffatom mindestens mit zwei Kohlenstoffatomen verbunden ist,
- R^{2F} und R^{3F}: unabhängig voneinander für Wasserstoff, Kohlenwasserstoff- oder substituierte Kohlenwasserstoffreste, wobei R^{2F} und R^{3F} auch zusammen ein Ringsystem bilden können, in dem auch ein oder mehrere Heteroatome vorhanden sein können,
- R^{6F} und R^{8F}: unabhängig voneinander für Kohlenwasserstoff- oder substituierte Kohlenwasserstoffreste,
- R^{5F} und R^{9F}: unabhängig voneinander für Wasserstoff, Kohlenwasserstoff- oder substituierte Kohlenwasserstoffreste,
wobei
- R^{6F} und R^{5F} bzw. R^{8F} und R^{9F}: auch zusammen ein Ringsystem bilden können,
- R^{7F}: unabhängig voneinander für Wasserstoff, Kohlenwasserstoff oder substituierte Kohlenwasserstoffreste, wobei zwei R^{7F} auch zusammen ein Ringsystem bilden können,
- R^{10F} und R^{14F}: unabhängig voneinander für Kohlenwasserstoff oder substituierte Kohlenwasserstoffreste,
- R^{11F}, R^{12F}, R^{12F}' und R^{13F}: unabhängig voneinander für Wasserstoff, Kohlenwasserstoff oder substituierte Kohlenwasserstoffreste, wobei auch zwei oder mehr geminale oder vicinale Reste R^{11A}, R^{12A}, R^{12A'} und R^{13A} zusammen ein Ringsystem bilden können,
- R^{15F} und R^{18F}: unabhängig voneinander für Wasserstoff, Kohlenwasserstoff oder substituierte Kohlenwasserstoffreste,
- R^{16F} und R^{17F}: unabhängig voneinander für Wasserstoff, Kohlenwasserstoff- oder substituierte Kohlenwasserstoffreste,
- R^{19F} und R^{25F}: unabhängig voneinander C₂-C₂₀-Alkenyl, C₆-C₂₀-Aryl, Alkylaryl mit 1 bis 10 C-Atomen im Alkylrest und 6-20 C-Atomen im Arylrest , wobei die organischen Reste R^{19F} und R^{25F} auch durch Halogene substituiert sein können,
- R^{20F} -R^{24F}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{26F}₃ bedeutet, wobei die organischen Reste R^{20F}-R^{24F} auch durch Halogene substituiert sein können und je zwei vicinale Reste R^{20F} -R^{24F} auch zu einem fünf- oder sechsgliedrigen Ring verbunden sein können und
- R^{26F}: unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{26F} auch zu einem fünf- oder sechsgliedrigen Ring verbunden sein können,
- x: für 0 oder 1, wobei F-XVI für x gleich 0 negativ geladen ist und
- y: für eine ganze Zahl zwischen 1 und 4 bevorzugt 2 oder 3.

Besonders geeignete sind Metallkomplexe mit Fe, Co, Ni, Pd oder Pt als Zentralmetall und Liganden der Formel F-XV. Besonders bevorzugt sind Diiminkomplexe des Ni oder Pd, z.B.:

Di(2,6-di-i-propyl-phenyl)-2,3-dimethyl-diazabutadien-palladiumdichlorid, Di(di-i-propyl-phenyl)-2,3-dimethyl-diazabutadien-nickel-dichlorid, Di(2,6-di-i-propyl-phenyl)-dimethyl-diazabutadien-palladium-dimethyl, Di(26-di-i-propyl-phenyl)-2,3-dimethyl-diazabutadien-nickel-dimethyl, Di(2,6-dimethyl-phenyl)-2,3-dimethyl-diazabutadien-palladiumdichlorid, Di(2,6-dimethyl-phenyl)-2,3-dimethyl-diazabutadien-nickel-dichlorid, Di(2,6-dimethyl-phenyl)-2,3-dimethyl-diazabutadien-palladium-dimethyl, Di(2,6-dimethyl-phenyl)-2,3-dimethyl-diazabutadien-nickel-dimethyl, Di(2-methyl-phenyl)-2,3-dimethyl-diazabutadien-palladium-dichlorid, Di(2-methylphenyl)-2,3-dimethyl-diazabutadien-nickel-dichlorid, Di(2-methyl-phenyl)-2,3-dimethyl-diazabutadien-palladium-dimethyl, Di(2-methyl-phenyl)-2,3-dimethyl-diazabutadien-nickel-dimethyl, Diphenyl-2,3-dimethyl-diazabutadien-palladium-dichlorid, Diphenyl-2,3-dimethyl-diazabutadien-nickel-dichlorid, Diphenyl-2,3-dimethyl-diazabutadien-palladium-dimethyl Diphenyl-2,3-dimethyl-diazabutadien-nickel-dimethyl, Di(2,6-dimethyl-phenyl)-azanaphten-palladium-dichlorid, Di(2,6-dimethyl-phenyl)-azanaphten-nickel-dichlorid, Di(2,6-dimethyl-phenyl)-azanaphten-palladium-dimethyl, Di(2,6-dimethyl-phenyl)-azanaphten-nickel-dimethyl, 1,1'-Dipyridyl-palladium-dichlorid, 1,1'-Dipyridyl-nickel-dichlorid, 1,1'-Dipyridyl-palladium-dimethyl und 1,1'-Dipyridyl-nickel-dimethyl.

Ganz besonders geeignet sind Metallkomplex aus der Gruppe 6 oder 7 des Periodensystems und einem Liganden der allgemeinen Formel F-XIX 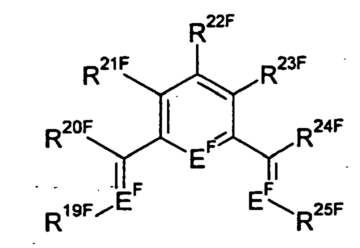 worin
- E^{F}: N oder P, bevorzugt N
- R^{19F} und R^{25F}: unabhängig voneinander C₂-C₂₀-Alkenyl, C₆C₂₀-Aryl, Alkylaryl mit 1 bis 10 C-Atomen im Alkylrest und 6-20 C-Atomen im Arylrest , wobei die organischen Reste R^{19F} und R^{25F} auch durch Halogene substituiert sein können,
- R^{20F}-R^{24F}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{26F}₃ bedeutet, wobei die organischen Reste R^{20F} -R^{24F} auch durch Halogene substituiert sein können und je zwei vicinale Reste R^{20F}-R^{24F} auch zu einem fünf- oder sechsgliedrigen Ring verbunden sein können und
- R^{26F}: unabhängig voneinander Wasserstoff, C₁-C₂₀-Alkyl, C₂C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{26F} auch zu einem fünf- oder sechsgliedrigen Ring verbunden sein können.

Besonders geeignete Verbindungen F-XIX sind auch solche, die in J. Am. Chem. Soc. 120, S. 4049 ff. (1998), J. Chem. Soc., Chem. Commun. 1998, 849 und WO 98/27124 beschrieben sind. R^{19F} und R^{25F} sind in F-XIX bevorzugt Phenyl, Naphthyl, Biphenyl, Anthranyl, o-, m-, p-Methylphenyl, 2,3-, 2,4-, 2,5-, oder 2,6-Dimethylphenyl, -Dichlorphenyl, oder -Dibromphenyl, 2-Chlor-6-methylphenyl, 2,3,4-, 2,3,5-, 2,3,6-, 2,4,5-, 2,4,6- oder 3,4,5-Trimethylphenyl, insbesondere 2,3-oder 2,6-Dimethylphenyl, -Diisopropylphenyl, -Dichlorphenyl, oder -Dibromphenyl und 2,4,6-Trimethylphenyl. Gleichzeitig sind R^{20F} und R^{24F} bevorzugt Wasserstoff, Methyl, Ethyl, n-Propyl, iso-Propyl, n-Butyl, tert.-Butyl, n-Pentyl, n-Hexyl, n-Heptyl, n-Octyl, Benzyl oder Phenyl, insbesondere Wasserstoff oder Methyl. R^{21F} und R^{23F} sind bevorzugt Wasserstoff und R^{22F} bevorzugt Wasserstoff, Methyl, Ethyl oder Phenyl, insbesondere Wasserstoff. Bevorzugt sind Komplexe der Liganden F-XIX mit übergangsmetallen Fe, Co oder Ni, insbesondere Fe. Besonders bevorzugte Metallkomplexe sind 2,6-Diacetylpyridinbis(2,4-dimethylphenylimin)eisendichlorid, 2,6-Diacetylpyridinbis(2,4,6-trimethylphenylimin)eisendichlorid, 2,6-Diacetylpyridinbis(2-chlor-6-methylphenyl)eisendichlorid, 2,6-Diacetylpyridinbis(2,6-diisopropylphenylimin)eisendichlorid, 2,6-Diacetylpyridinbis(2,6-dichlorphenylimin)eisendichlorid, 2,6-Pyridindicarboxaldehydbis(2,6-diisopropylphenylimin)eisendichlorid, 2,6-Diacetylpyridinbis(2,4-dimethylphenylimin)cobaltdichlorid, 2,6-Diacetylpyridinbis(2,4,6-trimethylphenylimin)cobaltdichlorid, 2,6-Diacetylpyridinbis(2-chlor-6-methylphenyl)cobaltdichlorid, 2,6-Diacetylpyridinbis(2,6-diisopropylphenylimin)cobaltdichlorid, 2,6-Diacetylpyridinbis(2,6-dichlorphenylimin)cobaltdichlorid und 2,6-Pyridindicarboxaldehydbis(2,6-diisopropylphenylimin)cobaltdichlorid.

Die Metallkomplexe werden mit einer Verbindung der Formel F-I umgesetzt, wobei M¹ bevorzugt Lithium, Natrium, Kalium oder Magnesium, besonders bevorzugt Lithium ist.

Die Substituenten R³ haben die gleiche Bedeutung wie für R¹ weiter oben ausgeführt, und sind bevorzugt Methyl, Ethyl, n-Propyl, iso-Propyl, n-Butyl, iso-Butyl, tert.-Butyl, n-Pentyl, n-Hexyl n-Heptyl, n-Octyl, Vinyl, Allyl, Benzyl, Phenyl, ortho Dialkyl- oder Dichlorosubstituierte Phenyle, Trialkyl- oder Trichlorosubstituierte Phenyle, Naphthyl, Biphenyl und Anthranyl.

Die Substituenten R⁴ haben die gleiche Bedeutung wie für R³ beschrieben und können ausserdem Wasserstoff, Halogen oder Alkoxy mit jeweils 1 bis 10 C-Atomen im Alkylrest und 6 bis 20 C-Atomen im Arylrest sein. Bevorzugt ist R⁴ gleich wie R³ oder Halogen oder Alkoxy, besonders bevorzugt gleich wie R³.

Besonders bevorzugte Verbindungen der Formel (F-I) sind Methyllithium, Ethyllithium, n-Butyllithium, Phenyllithium, Benzyllithium, Methylmagnesiumchlorid, Methylmagnesiumbromid, Ethylmagnesiumchlorid, Ethylmagnesiumbromid, Butylmagnesiumchlorid, Dimethylmagnesium, Diethylmagnesium, Dibutylmagnesium und Dibenzylmagnesium.

Es können auch Gemische aus verschiedenen Verbindungen F-I verwendet werden.

Die Verbindung der Formel F-I wird bevorzugt in einer solchen Menge im Katalysatorsystem enthalten, daß das molare Verhältnis von M¹ zu Metallkomplex von 100:1 bis 0,1:1, bevozugt von 10:1 bis 0,2:1 und besonders bevorzugt von 1:1 bis 0,5:1 beträgt.

Die Verbindung der Formel F-I wird üblicherweise vor der Polymerisation oder während der Polymerisation zum Metallkomplex gegeben. Wird sie vor der Polymerisation zugegeben, so geschieht dies üblicherweise 1 Minute bis 5 Stunden vor Polymerisationsbeginn, bevorzugt 5 Minuten bis 2 Stunden vor Polymerisationsbeginn und besonders bevorzugt 10 Minuten bis 1 Stunde Stunde vor Polymerisationsbeginn. Besonders bevorzugt ist ein Verfahren, in dem der Metallkomplex während der Polymerisation mit der Verbindung der Formel F-I umgesetzt wird.

In der erfindungsgemässen Verwendung des Verfahrens können die Metallkomplexe A) mit weiteren Komponenten als Katalysatorsystem zur Olefinpolymerisation verwendet werden. Das Katalysatorsystem kann weiterhin
B) optional einen organischen oder anorganischen Träger,
C) optional eine oder mehrere kationenbildende Verbindung oder
D) optional eine oder mehrere Metaltverbindungen der Gruppe 13 des Periodensystems
enthalten.

Damit die Metallkomplexe bei Polymerisationsverfahren in der Gasphase oder in Suspension eingesetzt werden können, ist es oftmals von Vorteil, daß sie in Form eines Feststoffs eingesetzt werden, d.h. daß sie auf einen festen Träger B) aufgebracht werden. Weiterhin weisen die geträgerten Metallkomplexe eine hohe Produktivität auf. Die Metallkomplexe können daher optional auch auf einem organischen oder anorganischen Träger B) immobilisiert und in geträgerter Form in der Polymerisation verwendet werden. Dies ist eine gängige Methode, um Reaktorablagerungen zu vermeiden und die Polymermorphologie zu steuern. Als Trägermaterialien werden bevorzugt Kieselgel, Magnesiumchlorid, Aluminiumoxid, mesoporöse Materialien, Aluminosilikate, Hydrotalcite und organische Polymere wie Polyethylen, Polypropylen oder Polystyrol verwendet. Bevorzugt ist der Metallkomplex auf einem Träger immobilisiert.

Als feste Trägermaterialien B) für Katalysatoren für die Olefinpolymerisation werden bevorzugt Kieselgele verwendet, da sich aus diesem Material Partikel herstellen lassen, die in ihrer Größe und Struktur als Träger für die Olefinpolymerisation geeignet sind. Besonders bewährt haben sich dabei sprühgetrocknete Kieselgele, bei denen es sich um sphärische Agglomerate aus kleineren granulären Partikel, den sogenannten Primärpartikeln, handelt. Die Kieselgele können dabei vor ihrer Verwendung getrocknet und/oder calciniert werden.

Ebenfalls bevorzugte Träger B) sind Hydrotalcite und calcinierte Hydrotalcite. In der Mineralogie wird als Hydrotalcit ein natürliches Mineral mit der idealformel

Mg₆Al₂(OH)₁₆CO₃˙4 H₂O

bezeichnet, dessen Struktur sich von derjenigen des Brucits Mg(OH)₂ ableitet. Brucit kristallisiert in einer Schichtstruktur mit den Metallionen in Oktaederlücken zwischen zwei Schichten aus dichtgepackten Hydroxylionen, wobei nur jede zweite Schicht der Oktaederlücken besetzt ist. Im Hydrotalcit sind einige Magnesiumionen durch Aluminiumionen ersetzt, wodurch das Schichtpaket eine positive Ladung erhält. Diese wird durch die Anionen ausgeglichen, die sich zusammen mit Kristallwasser in den Zwischenschichten befinden.

Entsprechende Schichtstrukturen finden sich nicht nur bei Magnesium-Aluminium-Hydroxiden, sondern allgemein bei schichtförmig aufgebauten, gemischten Metallhydroxiden der allgemeinen Formel

M(II)₂ₓ²⁺M(III)₂³⁺(OH)₄ₓ₊₄ · A_{2/n}ⁿ⁻ · z H₂O

in der M(II) ein zweiwertiges Metall wie Mg, Zn, Cu, Ni, Co, Mn, Ca und/oder Fe und M(III) ein dreiwertiges Metall wie Al, Fe, Co, Mn, La, Ce und/oder Cr ist, x für Zahlen von 0,5 bis 10 in 0,5 Schritten, A für ein interstitielles Anion und n für die Ladung des interstitiellen Anions steht, die von 1 bis 8, üblicherweise von 1 bis 4 betragen kann und z eine ganze Zahl von 1 bis 6, insbesondere von 2 bis 4 bedeutet. Als interstitielle Anionen kommen organische Anionen wie Alkoholatanionen, Alkylethersulfate, Arylethersulfate oder Glykolethersulfate, anorganische Anionen wie insbesondere Carbonat, Hydrogencarbonat, Nitrat, Chlorid, Sulfat oder B(OH)₄⁻ oder Polyoxometallanionen wie Mo₇O₂₄⁶⁻ oder V₁₀O₂₈⁶⁻ in Betracht. Es kann sich jedoch auch um eine Mischung mehrerer solcher Anionen handeln.

Dementsprechend sollen alle derartigen schichtförmig aufgebauten, gemischten Metallhydroxide als Hydrotalcite im Sinne der vorliegenden Erfindung verstanden werden.

Aus Hydrotalciten lassen sich durch Calcinieren, d.h. Erwärmen, die sogenannten calcinierten Hydrotalcite herstellen, wodurch u.a. der gewünschte Gehalt an Hydroxylgruppen eingestellt werden kann. Weiterhin verändert sich auch die Struktur des Kristallaufbaus. Die Herstellung der erfindungsgemäß eingesetzten calcinierten Hydrotalcite erfolgt üblicherweise bei Temperaturen oberhalb von 180°C. Bevorzugt ist eine Calcinierung für eine Zeitdauer von 3 bis 24 Stunden bei Temperaturen von 250°C bis 1000°C und insbesondere von 400°C bis 700°C. Gleichzeitiges Überleiten von Luft oder Inertgas oder Anlegen von Vakuum ist möglich.

Beim Erhitzen geben die natürlichen oder synthetischen Hydrotalcite zunächst Wasser ab, d.h. es erfolgt eine Trocknung. Beim weiteren Erhitzen, dem eigentlichen Calcinieren, wandeln sich die Metallhydroxide unter Abspaltung von Hydroxylgruppen und interstitiellen Anionen in die Metalloxide um, wobei auch in den calcinierten Hydrotalciten noch OH-Gruppen oder interstitielle Anionen wie Carbonat enthalten sein können. Ein Maß hierfür ist der Glühverlust. Dieser ist der Gewichtsverlust, den eine Probe erleidet, die in zwei Schritten zunächst für 30 min bei 200°C in einem Trockenschrank und dann für 1 Stunde bei 950°C in einem Muffelofen erhitzt wird.

Bei den als Komponente B) eingesetzten calcinierten Hydrotalciten handelt es sich somit um Mischoxide der zwei- und dreiwertigen Metalle M(II) und M(III), wobei das molare Verhältnis von M(II) zu M(III) in der Regel im Bereich von 0,5 bis 10, bevorzugt von 0,75 bis 8 und insbesondere von 1 bis 4 liegt. Weiterhin können noch übliche Mengen an Verunreinigungen, beispielsweise an Si, Fe, Na, Ca oder Ti enthalten sein.

Bevorzugte calcinierte Hydrotalcite B) sind Mischoxide, bei denen M(II) Magnesium und M(III) Aluminium ist. Entsprechende Aluminium-Magnesium-Mischoxide sind von der Fa. Condea Chemie GmbH, Hamburg unter dem Handelsnamen Puralox Mg erhältlich.

Bevorzugt sind weiterhin calcinierte Hydrotalcite, in denen die strukturelle Umwandlung nahezu oder vollständig abgeschlossen ist. Eine Calcinierung, d.h. eine Umwandlung der Struktur läßt sich beispielsweise anhand von Röntgendiffraktogrammen feststellen.

Die eingesetzten Hydrotalcite, calcinierten Hydrotalcite oder Kieselgele werden in der Regel als feinteilige Pulver mit einem mittleren Teilchendurchmesser D50 von 5 bis 200 µm, vorzugsweise von 10 bis 150 µm, besonders bevorzugt von 15 bis 100 µm und insbesondere von 20 bis 70 µm eingesetzt und weisen üblicherweise Porenvolumina von 0,1 bis 10 cm³/g, bevorzugt von 0,2 bis 5 cm³/g, und spezifische Oberflächen von 30 bis 1000 m²/g, bevorzugt von 50 bis 800 m²/g und insbesondere von 100 bis 600 m²/g auf. Die Metallkomplexe werden dabei bevorzugt in einer Menge aufgebracht, dass die Konzentration des Metallkomplex im fertigen Katalysatorsystem 10 bis 200 µmol, bevorzugt 20 bis 100 µmol und besonders bevorzugt 25 bis 70 µmol pro g Träger A) beträgt.

Die Metallkomplexe sind für sich teilweise nur wenig polymerisationsaktiv und werden dann mit einem Aktivator, der Komponente C), in Kontakt gebracht um gute Polymerisationsaktivität entfalten zu können. Weiterhin enthält das Katalysatorsystem daher optional als Komponente C) eine oder mehrere kationenbildende Verbindung, bevorzugt mindestens eine kationenbildende Verbindung C).

Geeignete kationenbildende Verbindungen C), die in der Lage sind, durch Reaktion mit dem Metallkomplexe diesen in eine kationische Verbindung zu überführen, sind z.B. Verbindungen vom Typ eines Aluminoxans, einer starken neutralen Lewis-Säure, einer ionischen Verbindung mit lewissaurem Kation oder einer ionischen Verbindung mit Brönsted-Säure als Kation.

Als Aluminoxane können beispielsweise die in der WO 00/31090, beschriebenen Verbindungen eingesetzt werden. Besonders geeignet sind offenkettige oder cyclische Aluminoxanverbindungen der allgemeinen Formeln (F X) oder (F XI) 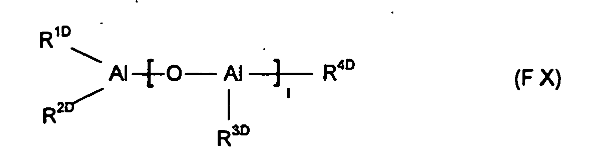 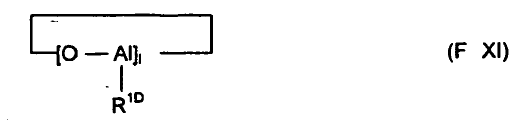 wobei
- R^{1D}-R^{4D}: unabhängig voneinander eine C₁-C₆-Alkylgruppe bedeutet, bevorzugt eine Methyl-, Ethyl-, Butyl- oder Isobutylgruppe und I für eine ganze Zahl von 1 bis 30, bevorzugt 5 bis 25 steht.

Eine insbesondere geeignete Aluminoxanverbindung ist Methylaluminoxan.

Die Herstellung dieser oligomeren Aluminoxanverbindungen erfolgt üblicherweise durch kontrollierte Umsetzung einer Lösung von Trialkylaluminium mit Wasser. In der Regel liegen die dabei erhaltenen oligomeren Aluminoxanverbindungen als Gemische unterschiedlich langer, sowohl linearer als auch cyclischer Kettenmoleküle vor, so daß I als Mittelwert anzusehen ist. Die Aluminoxanverbindungen können auch im Gemisch mit anderen Metallalkylen, üblicherweise mit Aluminiumalkylen vorliegen. Als Komponente C) geeignete Aluminoxan-Zubereitungen sind kommerziell erhältlich.

Weiterhin können als Komponente C) anstelle der Aluminoxanverbindungen der allgemeinen Formeln (F X) oder (F XI) auch modifizierte Aluminoxane eingesetzt werden, bei denen teilweise die Kohlenwasserstoffreste oder durch Wasserstoffatome, Alkoxy-, Aryloxy-, Siloxy-, oder Amidreste ersetzt sind.

Es hat sich als vorteilhaft erwiesen, die Metallkomplexe und die Aluminoxanverbindungen in solchen Mengen zu verwenden, daß das atomare Verhältnis zwischen Aluminium aus den Aluminoxanverbindungen einschliesslich noch enthaltenem Aluminiumalkyl, und dem Übergangsmetall aus dem Metallkomplex im Bereich von 10:1 bis 1000:1, bevorzugt von 20:1 bis 500:1 und insbesondere im Bereich von 30:1 bis 400:1, liegt.

Als starke, neutrale Lewissäuren sind Verbindungen der allgemeinen Formel (F XII)

M^{2D}X^{1D}X^{2D}X^{3D} (F XII)

bevorzugt, in der
- M^{2D}: ein Element der 13. Gruppe des Periodensystems der Elemente bedeutet, insbesondere B, Al oder Ga, vorzugsweise B,
- X^{1D}, X^{2D} und X^{3D}: für Wasserstoff, C₁-C₁₀-Alkyl, C₆-C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Weitere Beispiele für starke, neutrale Lewissäuren sind in der WO 00/31090 genannt.

Insbesondere sind als Komponente C) Borane und Boroxine geeignet, wie z. B. Trialkylboran, Triarylboran oder Trimethylboroxin. Besonders bevorzugt werden Borane eingesetzt, welche mindestens zwei perfluorierte Arylreste tragen. Besonders bevorzugt sind Verbindungen der allgemeinen Formel (F XII), in der X^{1D}, X^{2D} und X^{3D} gleich sind, vorzugsweise Tris(pentafluorphenyl)boran.

Starke neutrale Lewissäuren, die sich als kationenbildende Verbindungen C) eignen, sind auch die Reaktionsprodukte aus der Umsetzung einer Boronsäure mt zwei Äquivalenten eines Aluminiumtrialkyls oder die Reaktionsprodukte aus der Umsetzung eines Aluminiumtrialkyls mit zwei Äquivalenten einer aciden fluorierten, insbesondere perfluorierten Kohlenstoffverbindung wie Pentafluorphenol oder Bis-(pentafluorphenyl)-borinsäure.

Als ionische Verbindungen mit lewissauren Kationen sind salzartige Verbindungen des Kations der allgemeinen Formel (F XIII)

[((M^{3D})^{a+})Q₁Q₂...Q_{z}]^{d+} (F XIII)

geeignet, in denen
- M^{3D}: ein Element der 1. bis 16. Gruppe des Periodensystems der Elemente bedeutet,
- Q₁ bis Q_{z}: für einfach negativ geladene Reste wie C₁-C₂₈-Alkyl, C₆C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃-C₁₀-Cycloalkyl, welches gegebenenfalls mit C₁-C₁₀-Alkylgruppen substituiert sein kann, Halogen, C₁-C₂₈-Alkoxy, C₆-C₁₅-Aryloxy, Silyl- oder Mercaptylgruppen
- a: für ganze Zahlen von 1 bis 6 und
- z: für ganze Zahlen von 0 bis 5 steht,
- d: der Differenz a - z entspricht, wobei d jedoch größer oder gleich 1 ist

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nichtkoordinierende Gegenionen, insbesondere Borverbindungen wie sie auch in der WO 91/09882 genannt werden, bevorzugt Tetrakis(pentafluorophenyl)borat.

Salze mit nicht koordinierenden Anionen können auch durch Zusammengabe einer Bor- oder Aluminiumverbindung, z.B. einem Aluminiumalkyl, mit einer zweiten Verbindung, die durch Reaktion zwei oder mehrere Bor- oder Aluminiumatome verknüpfen kann, z.B. Wasser, und einer dritten Verbindung, die mit der Bor- oder Aluminiumverbindung eine ionisierende ionische Verbindung bildet, z.B. Triphenylchlormethan, hergestellt werden. Zusätzlich kann eine vierte Verbindung, die ebenfalls mit der Bor- oder Aluminiumverbindung reagiert, z.B. Pentafluorphenol, hinzugefügt werden.

lonische Verbindungen mit Brönsted-Säuren als Kationen haben vorzugsweise ebenfalls nichtkoordinierende Gegenionen. Als Brönstedsäure werden insbesondere protonierte Amin- oder Anilinderivate bevorzugt. Bevorzugte Kationen sind N,N-Dimethylanilinium, N,N-Dimethylcylohexylammonium und N,N-Dimethylbenzylammonium sowie Derivate der beiden letztgenannten.

Auch Verbindungen mit anionischen Borheterocyclen, wie sie in der WO 9736937 beschrieben sind eignen sich als Komponente C), insbesondere Dimethylaniliniumboratabenzole oder Tritylboratabenzole.

Bevorzugte ionische Verbindungen C) enthalten Borate, welche mindestens zwei perfluorierte Arylreste tragen. Besonders bevorzugt sind N,N-Dimethylaniliniumtetrakis-(pentafluorophenyl)borate und insbesondere N,N-Dimethyl-cyclohexylammoniumtetrakis(pentafluorophenyl)borat, N,N-Dimethylbenzylammoniumtetrakis(pentafluorophenyl)borat oder Trityltetrakispentafluorophenylborat.

Es können auch zwei oder mehrere Boratanionen miteinander verbunden sein, wie in dem Dianion [(C₆F₅)₂B-C₆F₄-B(C₆F₅)₂]²⁻, oder das Boratanion kann über eine Brücke mit einer geeigneten funktionellen Gruppe auf der Trägeroberfläche gebunden sein.

Weitere geeignete kationenbildende Verbindungen C) sind in der WO 00/31090 aufgelistet.

Die Menge an starken, neutralen Lewissäuren, ionischen Verbindungen mit lewissauren Kationen oder ionischen Verbindungen mit Brönsted-Säuren als Kationen beträgt bevorzugt 0,1 bis 20 Äquivalente, bevorzugt 1 bis 10 Äquivalente, bezogen auf den Metallkomplex .

Geeignete kationenbildende Verbindungen B) sind auch Bor-Aluminium-Verbindungen wie Di-[bis(pentafluorphenylboroxy)]methylalan. Entsprechende Bor-Aluminium-Verbindungen sind beispielsweise die in der WO 99/06414 offenbart.

Es können auch Gemische aller zuvor genannten kationenbildenden Verbindungen C) eingesetzt werden. Bevorzugte Mischungen enthalten Aluminoxane, insbesondere Methylaluminoxan, und eine ionische Verbindung, insbesondere eine, die das Tetrakis(pentafluorphenyl)borat-Anion enthält, und/oder eine starke neutrale Lewissäure, insbesondere Tris(pentafluorphenyl)boran.

Vorzugsweise werden sowohl die Metallkomplexe als auch die kationenbildende Verbindungen C) in einem Lösungsmittel eingesetzt, wobei aromatische Kohlenwasserstoffe mit 6 bis 20 C-Atomen, insbesondere Xylole, Toluol, Pentan, Hexan, Heptan oder Mischungen von diesen bevorzugt sind.

Das Katalysatorsystem kann als weitere Komponente D) zusätzlich noch eine Metallverbindung der allgemeinen Formel (F-XX),

M^{G}(R^{1G})ᵣG(R^{2G})ₛG (R^{3G})ₜG (F-XX)

in der
- M^{G}: Bor, Aluminium, Gallium, Indium oder Thallium bedeutet,
- R^{1G}: Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
- R^{2G} und R^{3G}: Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
- r^{G}: eine ganze Zahl von 1 bis 3
und
- s^{G} und t^{G}: ganze Zahlen von 0 bis 2 bedeuten, wobei die Summe r^{G}+S^{G}+t^{G} der Wertigkeit von M^{G} entspricht,
enthalten, wobei die Komponente D) nicht identisch mit der Komponente C) ist. Es können auch Mischungen verschiedener Metallverbindungen der Formel (F-XX) eingesetzt werden.

Von den Metallverbindungen der allgemeinen Formel (F-XX) sind diejenigen bevorzugt, in denen
- M^{G}: Aluminium bedeutet und
- R^{2G} und R^{3G}: für C₁-C₂₀-Alkyl stehen.

Besonders bevorzugte Metallverbindungen der Formel (F-XX) sind Tri-n-hexyl-aluminium, Triiso-butyl-aluminium, Tri-n-butylaluminium, Triethylaluminium, Dimethylaluminiumchlorid, Dimethylaluminiumfluorid, Methylaluminiumdichlorid, Methylaluminiumsesquichlorid, Diethylaluminiumchlorid und Trimethylaluminium und Mischungen davon. Auch die partiellen Hydrolyseprodukte von Aluminiumalkylen mit Alkoholen können eingesetzt werden.

Wenn eine Metallverbindung D) eingesetzt wird, ist sie bevorzugt in einer solchen Menge im Katalysatorsystem enthalten, daß das molare Verhältnis von M^{G} aus Formel (F-XX) zu Übergangsmetall aus Metallkomplex von 2000:1 bis 0,1:1, bevozugt von 800:1 bis 0,2:1 und besonders bevorzugt von 100:1 bis 1:1 beträgt.

Bevorzugt wird zur Herstellung der erfindungsgemäßen Katalysatorsysteme mindestens ein Metallkomplex A) zusammmen mit C) auf dem Träger B) durch Physisorption oder auch durch eine chemische Reaktion, das bedeutet eine kovalente Anbindung der Komponenten, mit reaktiven Gruppen der Trägeroberfläche fixiert. Die Reihenfolge der Zusammengabe von Trägerkomponente B), Metallkomplex A) und gegebenenfalls Komponente C) ist beliebig. Der Metallkomplex A) und kationenbildende Verbindung C) können unabhängig voneinander oder auch gleichzeitig oder vorvermischt zu B) zugegeben werden. Nach den einzelnen Verfahrensschritten kann der Feststoff mit geeigneten inerten Lösungsmitteln wie aliphatischen oder aromatischen Kohlenwasserstoffen gewaschen werden.

In einer bevorzugten Ausführungsform wird der Metallkomplex A) in einem geeigneten Lösungsmittel mit der kationenbildenden Verbindung C) in Kontakt gebracht, wobei üblicherweise ein lösliches Reaktionsprodukt, ein Addukt oder ein Gemisch erhalten wird. Die so erhaltene Zubereitung wird dann mit dem gegebenenfalls vorbehandelten Träger B) in Kontakt gebracht, und das Lösungsmittel vollständig oder teilweise entfernt. Bevorzugt erhält man dann einen Feststoff in Form eines frei fließenden Pulvers. Beispiele für die technische Realisierung des obigen Verfahrens sind in WO 96/00243, WO 98/40419 oder WO 00/05277 beschrieben. Einer weitere bevorzugte Ausführungsform ist, zunächst die kationenbildende Verbindung C) auf dem Träger B) zu erzeugen und anschließend diese geträgerte kationenbildende Verbindung mit dem Metallkomplex in Kontakt zu bringen.

Bevorzugt wird D) zuerst mit dem zu polymerisierenden alpha-Olefin in Kontakt gebracht und anschliessend der Katalysatorfeststoff aus Metallkomplex A) und den Komponenten B) und C) wie weiter oben beschrieben, zugegeben. Die Verbindung F-I kann ebenfalls in beliebiger Reihenfolge zugegeben werden, wird jedoch bevorzugt nach Kontaktieren des Metallkomplexes mit B) und/oder C) zugemischt.

Es ist weiterhin möglich, das Katalysatorsystem zunächst mit α-Olefinen, bevorzugt linearen C₂-C₁₀-1-Alkene und insbesondere mit Ethylen oder Propylen vorzupolymerisieren und dann den resultierenden vorpolymerisierten Katalysatorfeststoff bei der eigentlichen Polymerisation zu verwenden. Üblicherweise liegt das Massenverhältnis von bei der Vorpolymerisation eingesetztem Katalysatorfeststoff zu hinzupolymerisiertem Monomer im Bereich von 1:0,1 bis 1:1000, bevorzugt 1:1 bis 1:200.

Weiterhin kann als Additiv während oder nach der Herstellung des Katalysatorsystems eine geringe Menge eines Olefins, bevorzugt eines α-Olefins, beispielsweise Vinylcyclohexan, Styrol oder Phenyldimethylvinylsilan, als modifizierende Komponente, ein Antistatikum oder eine geeignete inerte Verbindung wie eine Wachs oder Öl zugesetzt werden. Das molare Verhältnis von Additiven zu Metallkomplex beträgt dabei üblicherweise von 1:1000 bis 1000:1, bevorzugt von 1:5 bis 20:1.

Im Verfahren zur Polymerisation von Olefinen und sind vor allem α-Olefine, d.h. Kohlenwasserstoffen mit endständigen Doppelbindungen als Monomere bevorzugt. Geeignete Monomere können funktionalisierte olefinisch ungesättigte Verbindungen wie Acrolein, Ester- oder Amidderivate der Acryl- oder Methacrylsäure, beispielsweise Acrylate, Methacrylate oder Acrylnitril oder Vinylester, beispielsweise Vinylacetat sein. Bevorzugt sind unpolare olefinische Verbindungen, worunter auch arylsubstituierte α-Olefine fallen. Besonders bevorzugte α-Olefine sind lineare oder verzweigte C₂-C₁₂-1-Alkene, insbesondere lineare C₂-C₁₀-1-Alkene wie Ethylen, Propylen, 1-Buten, 1-Penten, 1-Hexen, 1-Hepten, 1-Octen, 1-Decen oder verzweigte C₂-C₁₀-1-Alkene wie 4-Methyl-1-penten, konjugierte und nicht konjugierte Diene wie 1,3-Butadien, 1,5-Hexadien, oder 1,7-Octadien oder vinylaromatische Verbindungen wie Styrol oder substituiertes Styrol. Es können auch Gemische aus verschiedenen α-Olefinen polymerisiert werden. Bevorzugt wird mindestens ein Olefin ausgewählt aus der Gruppe Ethen, Propen, 1-Buten, 1-Penten, 1-Hexen, 1-Hepten, 1-Octen und 1-Decen polymerisiert.

Geeignete Olefine sind auch solche, bei denen die Doppelbindung Teil einer cyclischen Struktur ist, die ein oder mehrere Ringsysteme aufweisen kann. Beispiele hierfür sind Cyclopenten, Cyclohexen, Norbomen, Tetracyclododecen oder Methylnorbornen oder Diene wie 5-Ethyliden-2-norbomen, Norbomadien oder Ethylnorbornadien.,

Es können auch Gemische aus zwei oder mehreren Olefinen polymerisiert werden. Als Comonomere bei der Ethylenpolymerisation werden bevorzugt C₃-C₈-α-Olefine, insbesondere 1-Buten, 1-Penten, 1-Hexen und/oder 1-Octen verwendet. Bevorzugt werden Monomermischungen mit mindestens 50 mol-% Ethylen verwendet. Bevorzugte Comonomere bei der Propylenpolymerisation sind Ethylen und/oder Buten.

Das Polymerisationsverfahren kann in bekannter Weise in Masse, in Suspension, in der Gasphase oder in einem überkritischen Medium in den üblichen, für die Polymerisation von Olefinen verwendeten Reaktoren durchgeführt werden. Es kann diskontinuierlich oder bevorzugt kontinuierlich in einer oder mehreren Stufen erfolgen. Es kommen Hochdruck-Polymerisationsverfahren in Rohrreaktoren oder Autoklaven, Lösungsverfahren, Suspensionsverfahren, gerührte Gasphasenverfahren oder Gasphasenwirbelschichtverfahren in Betracht.

Die Polymerisationen werden üblicherweise bei Temperaturen im Bereich von -60 bis 350°C und unter Drücken von 0,5 bis 4000 bar bei mittleren Verweilzeiten von 0,5 bis 5 Stunden, bevorzugt von 0,5 bis 3 Stunden durchgeführt. Die vorteilhaften Druck- und Temperaturbereiche zur Durchführung der Polymerisationen hängen stark von der Polymerisationsmethode ab. Bei den Hochdruck-Polymerisationsverfahren, die üblicherweise bei Drücken zwischen 1000 und 4000 bar, insbesondere zwischen 2000 und 3500 bar, durchgeführt werden, werden in der Regel auch hohe Polymerisationstemperaturen eingestellt. Vorteilhafte Temperaturbereiche für diese Hochdruck-Polymerisationsverfahren liegen zwischen 200 und 320°C, insbesondere zwischen 220 und 290°C. Bei Niederdruck-Polymerisationsverfahren wird in der Regel eine Temperatur eingestellt, die mindestens einige Grad unter der Erweichungstemperatur des Polymerisates liegt. Insbesondere werden in diesen Polymerisationsverfahren Temperaturen zwischen 50 und 180°C, vorzugsweise zwischen 70 und 120°C, eingestellt. Bei den Suspensionspolymerisationen wird üblicherweise in einem Suspensionsmittel, vorzugsweise in einem inerten Kohlenwasserstoff, wie beispielsweise iso-Butan, oder aber in den Monomeren selbst polymerisiert. Die Polymerisationstemperaturen liegen i.a. im Bereich von -20 bis 115°C, der Druck i.a. im Bereich von 1 bis 100 bar. Der Feststoffgehalt der Suspension liegt i.a. im Bereich von 10 bis 80 %. Es kann sowohl diskontinuierlich, z.B. in Rührautoklaven, als auch kontinuierlich, z.B. in Rohrreaktoren, bevorzugt in Schleifenreaktoren, gearbeitet werden. Insbesondere kann nach dem Phillips-PF-Verfahren, wie in der US-A 3 242 150 und US-A 3 248 179 beschrieben, gearbeitet werden. Die Gasphasenpolymerisation wird i.a. im Bereich von 30 bis 125°C durchgeführt.

Von den genannten Polymerisationsverfahren ist die Gasphasenpolymerisation, insbesondere in Gasphasenwirbelschicht-Reaktoren, die Lösungspolymerisation, sowie die Suspensionspolymerisation, insbesondere in Schleifen- und Rührkesselreaktoren, besonders bevorzugt. Die Gasphasenpolymerisation kann auch in der sogenannten condensed oder supercondensed Fahrweise durchgeführt werden, bei dem ein Teil des Kreisgases unter den Taupunkt gekühlt und als Zwei-Phasen-Gemisch in den Reaktor zurückgeführt wird. Die verschiedenen oder auch gleichen Polymerisationsverfahren können auch wahlweise miteinander in Serie geschaltet sein und so eine Polymerisationskaskade bilden. Weiterhin können bei den Polymerisationen auch Molmassenregler, beispielsweise Wasserstoff, oder übliche Zuschlagstoffe wie Antistatika mitverwendet werden.

Duch die Zugabe der Verbindung mit der Formel F-I werden die Gruppe C=E oder das heteroaromatisches Ringsystem, enthaltend mindestens ein Atom der Gruppen N, P, O oder S im Metallkomplex modifiziert. Dies ist auch möglich wenn der Metallkomplex schon in einer polymerisationsaktiven Form, beispielsweise nach Umsetzung mit C) und eventuell D), vorliegt. Eine Imino-Gruppe kann so beispielsweise in ein Amid umgewandelt werden. Pyridine und Chinoline können so beispielsweise in 2-Position substituiert werden. Die Reaktionen an den freien Verbindungen sind bekannt und beispielsweise in Wakefield "Organomagnesium methods in Organic Synthesis", S. 96 beschrieben.

Dadurch wird ein zweiter Metallkomplex erzeugt, welcher ein anderes Molekulargewicht und/oder ein anderes Comonomereinbauverhalten zeigt.

Durch diese chemische Modifikation kann das Verfahren zur Steuerung der Molmassenverteilung Mw/Mn und/oder des Comonomereinbauverhaltens verwendet werden,

Durch das erfindungsgemäßen Verfahren lassen sich Polymerisate von Olefinen darstellen. Der Begriff Polymerisation, wie er zur Beschreibung der Erfindung hier verwendet wird, umfaßt sowohl Polymerisation als auch Oligomerisation, d.h. Oligomere und Polymere mit Molmassen Mw im Bereich von etwa 56 bis 3000000 können durch diese Verfahren erzeugt werden. Je nach Verbindung F-I lassen sich die Molmassenverteilungen Mw/Mn in einem weiten Bereich von 2 bis 30 , bevorzugt von 2 bis 20 und besonders bevorzugt von 2 bis 10 variieren.

Auf Grund ihrer guten mechanischen Eigenschaften eignen sich die mit dem erfindungsgemäßen Katalysatorsystem hergestellten Polymerisate von Olefinen vor allem für die Herstellung von Folien, Fasern und Formkörpern.

Die erfindungsgemäßen Katalysatorsysteme zeichnen sich dadurch aus, daß sie eine sehr hohe Produktivität bei der Polymerisation von Olefinen aufweisen, Vorteile bei der Aufarbeitung der Polymerisate nach der Polymerisation bieten, und zu deutlich weniger Problemen im Hinblick auf Katalysatorrückstände im Polymerisat führen. Die mit dem erfindungsgemäßen Katalysatorsystem hergestellten Polymerisate eigenen sich bevorzugt für solche Anwendungen, die eine hohe Produktreinheit erfordern. Die erfindungsgemässen Katalysatorsysteme zeigen ausserdem auch bei relativ niedrigem molaren Verhältnis von Alumoxan zu Organoübergangsmetall eine sehr gute Aktivität

### Beispiele

Zur Charakterisierung der Proben wurden folgende Prüfungen durchgeführt

### Bestimmung des Eta-Wertes:

mit einem automatischen Ubbelohde Viskometer (Lauda PVS 1) mit Dekalin als Lösungsmittel bei 130°C (IS01628 bei 130°C, 0,001 g/ml Decalin)

Die Bestimmung der Molmassenverteilungen und der daraus abgeleiteten Mittelwerte Mn, Mw, Mw/Mn und Mz erfolgte mittels Hochtemperatur-Gelpermeations-chromatographie in Anlehnung an DIN 55672 unter folgende Bedingungen: Lösungsmittel: 1,2,4-Trichlorbenzol, Fluß: 1ml/min, Temperatur: 135°C, Kalibrierung mit PE Standards.

Der Comonomergehalt des Polymeren (%C₆), dessen Methylseitenkettengehalt pro 1000 C-Atome der Polymerkette (CH₃/1000) und dessen Dichte (ISO 1183) wurde durch IR Spectroskopie bestimmt.

Als Katalysator in den folgende Beispielen wurde jeweils 1-(8-Chinolyl)-2,3,4,5-tetramethyl-cyclopentadienylchromdichlorid verwendet Die Garstellung dieses Komplexes ist in der WO 01/12641 beschrieben. Die Katalysatorlösungen wurden jeweils in einem Kolben durchgeführt, in dem die anschliessende Polymerisation durchgeführt wurde. Es wurde in einem 1I-Vierhalskolben mit Kontaktthermometer, Rührer mit Teflonblatt, Heizpilz und Gaseinleitungsrohr bei 50°C polymerisiert. Die Polymerisation wird durch Zugabe eines Gemisches aus 15 ml konzentrierter Salzsäure und 50 ml Methanol bei 0°C abgestoppt und 15 min nachgerührt. Dann wurden weitere 250 ml Methanol zugegeben und weitere 15 min rühren lassen, das Polymer abfiltriert, dreimal mit Methanol gewaschen und bei 70°C getrocknet.

### Vergleichsbeispiel V1

Es wurden 4,22 mg 1-(8-Chinolyl)-2,3,4,5-tetramethylcyclopentadienylchromdichlorid (11,3 µmol) in 250 ml Toluol gelöst, auf 40°C erhitzt und mit 18,4 mg Dimethylanilinium(tetrakis-pentafluorophenylborat) ( 22,7 µmol) versetzt. Nachdem das Reaktionsgemisch auf 70°C erwärmt und 10 Minuten bei 70°C gerührt wurde, wurde anschliessend auf 50°C gekühlt und dann mit 0,284 ml einer 2 M Lösung von Triisobutylaluminium (567 µmol) in Heptan versetzt. Dann wurden 5 ml Hexen zugegeben und anschliessend ca. 20 bis 40 l/h Ethylen für 15 Minuten durch die Lösung geleitet. Es wurde wie oben beschrieben aufgearbeitet.

Die Produktivität betrug 3245 g PE/(mmol Chromkomplex x h).
In der Tabelle 1 sind die Produktdaten zusammengefaßt.

### Beispiel 1

Es wurden 4,67 mg 1-(8-Chinolyl)-2,3,4,5-tetramethylcyclopentadienylchromdichlorid (12,6 µmol) in 250 ml Toluol gelöst, auf 40°C erhitzt und mit 20,3 mg Dimethylanilinium(tetrakis-pentafluorophenylborat) (25,1 µmol) versetzt. Nachdem das Reaktionsgemisch auf 70°C erwärmt und 10 Minuten bei 70°C gerührt wurde, wurde anschliessend auf 50°C gekühlt und dann zuerst mit 0,215 ml einer 0,875 M Lösung von Butyl-Octyl-Magnesium (188,25 µmol) in Heptan und anschliessend mit 0,31 ml einer 2 M Lösung von Triisobutylaluminium (628 µmol) in Heptan versetzt. Dann wurden 5 ml Hexen zugegeben und anschliessend ca. 20 bis 40 l/h Ethylen für 15 Minuten durch die Lösung geleitet.
Es wurde wie oben beschrieben aufgearbeitet.

Die Produktivität betrug 1785 g PE/(mmol Chromkomplex x h).
In der Tabelle 1 sind die Produktdaten zusammengefaßt.

### Beispiel 2

Es wurden 4,3 mg 1-(8-Chinolyl)-2,3,4,5-tetramethylcyclopentadienylchromdichlorid (11,6 µmol) in 250 ml Toluol gelöst, auf 40°C erhitzt und mit 18,7 mg Dimethylanilinium(tetrakis-pentafluorophenylborat) (23,16 µmol) versetzt. Nachdem das Reaktionsgemisch auf 70°C erwärmt und 10 Minuten bei 70°C gerührt wurde, wurde anschliessend auf 50°C gekühlt und dann zuerst mit 0,217 ml einer 0,16 M Lösung von n-Butyllithium in Hexan (34,7 µmol) und anschliessend mit 0,29 ml einer 2 M Lösung von Triisobutylaluminium (579 µmol) in Heptan versetzt. Dann wurden 5 ml Hexen zugegeben und anschliessend ca. 20 bis 40 l/h Ethylen für 60 Minuten durch die Lösung geleitet.
Es wurde wie oben beschrieben aufgearbeitet

Die Produktivität betrug 147 g PE/(mmol Chromkomplex x h).
In der Tabelle 1 sind die Produktdaten zusammengefaßt.

**Tabelle 1: Polymerdaten**

| Bsp. | Eta [dl/g] | Dichte [g/cm³] | % C₆ | Mw | Mw/Mn |
|---|---|---|---|---|---|
| V1 | 2,02 | 0,9099 | 6,1 | 151502 | 3,01 |
| 1 | 1,47 | 0,9367 | 3,3 | 109936 | 8,49 |
| 2 | 5,74 | 0,9259 | 1,7 | 628848 | 7,67 |

### Beispiel 3

Beispiel 2 wurde wiederholt, mit dem Unterschied, dass das n-Butyllithium (0,6 Äquivalente pro mol Cr) nach der Zugabe des Triisobutylaluminium hinzugegeben wurde. In den CRYSTAF Spektren ist zu sehen, dass in Beispiel 3 im Vergleich zu V1 eine breitere Zusammensetzungsverteilung vorhanden ist. d.h es bilden sich in Beispiel 3 zusätzlich zu den Copolymeren aus V1 auch noch Copolymere, welche einen anderen Comonomeranteil besitzen.

## Patentansprüche

1. Verwendung des Verfahrens zur Polymerisation von Olefinen in Anwesenheit eines Katalysatorsystems enthaltend
A) einen Metallkomplex der Gruppen 3, 4, 5, 6, 7, 8, 9 oder 10 des Periodensystems, enthaltend mindestens eine Gruppe C=E oder ein heteroaromatisches Ringsystem, enthaltend mindestens ein Atom der Gruppen N, P, O oder S, worin E oder mindestens ein Atom der Gruppen N, P, O oder S des heteroaromatisches Ringsystems, direkt an das Metall des Metallkomplexes gebunden ist, wobei
E NR¹, PR¹, O oder S,
R¹ C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR²₃, wobei der organisch Rest R¹ auch durch Halogene substituiert sein kann und
R² unabhängig voneinander Wasserstoff, C₁-C₂₀-Alkyl, C₂-C₂₀-Alkenyl, C₆C₂₀-Aryl, Alkylaryl mit 1 bis 10 C-Atomen im Alkylrest und 6-20 C-Atomen im Arylrest und je zwei Reste R³ auch zu einem fünf- oder sechsgliedrigen Ring verbunden sein können, ist,
B) optional einen organischen oder anorganischen Träger,
C) eine oder mehrere kationenbildende Verbindungen und
D) optional eine oder mehrere Metallverbindungen der Gruppe 13 des Periodensystems,
**dadurch gekennzeichnet, dass** das Katalysatorsystem mit einer Verbindung der Formel F-I
M¹ (R³)ᵣA(R⁴)ₛA (F-I)
in der
M¹ Li, Na, K, Be, Mg, Ca, Sr, Ba oder Zn bedeutet,
R³ C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest
R⁴ Wasserstoff, Halogen, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder Alkoxy mit jeweils 1 bis 10 C-Atomen im Alkylrest und 6 bis 20 C-Atomen im Arylrest,
r^{A} eine ganze Zahl von 1 bis 2
und
s^{A} eine Zahl von 0 oder 1 bedeutet, wobei die Summe r^{A}+s^{A} der Wertigkeit von M¹ entspricht,
umgesetzt wird,
zur Steuerung der Breite der Molmassenvertellung Mw/Mn und/oder des Comonomereinbauverhaltens.

2. Verwendung des Verfahrens nach Anspruch 1, **dadurch gekennzeichnet, dass** im Metallkomplex A) E oder mindestens ein Atom der Gruppen N, P, O oder S des heteroaromatisches Ringsystems, direkt an das Metall im Metallkomplex gebunden ist.

3. Verwendung des Verfahrens nach Anspruch 1 oder 2, **dadurch gekennzeichnet, dass** der Metallkomplex A) während der Polymerisation mit der Verbindung der Formel F-I umgesetzt wird.

4. Verwendung des Verfahrens nach einem der Ansprüche 1 bis 3, **dadurch gekennzeichnet, dass** M¹ in der Verbindung der Formel F-I, Lithium ist.

5. Verwendung des Verfahrens nach einem der Ansprüche 1 bis 4, **dadurch gekennzeichnet, dass** der Metallkomplex A) die allgemeinen Formel (Cp)(-Zₘ-A)MXₖ hat, worin die Variablen folgende Bedeutung haben:
Cp ein Cyclopentadienyl-System
Z eine divalente Brücke zwischen A und Cp
A C=NR⁵, oder ein unsubstituiertes, substituiertes oder kondensiertes, heteroaromatisches Ringsystem,
M ein Metall der Gruppen 3, 4, 5 oder 6 des Periodensystems
X unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR⁶R⁷, OR⁶, SR⁶, SO₃R⁶, OC(O)R⁶, BF₄-, PF₆-, oder sperrige nichtkoordinierende Anionen,
R⁵-R⁷ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR⁸₃, wobei die organischen Reste R⁵-R⁷ auch durch Halogene substituiert sein können und je zwei Reste R⁵-R⁷ auch zu einem fünf- oder sechsgliedrigen Ring verbunden sein können,
R⁸ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R⁸ auch zu einem fünf- oder sechsgliedrigen Ring verbunden sein können,
k 1, 2, oder 3 und
m 1 ist, oder wenn A ein heteroaromatisches Ringsystem ist, auch 0 sein kann.

6. Verwendung des Verfahrens nach Anspruch 5, **dadurch gekennzeichnet, dass** im Metallkomplex A) der allgemeinen Formel (Cp)(-Zₘ -A)MXₖ, A ausgewählt ist aus der Gruppe 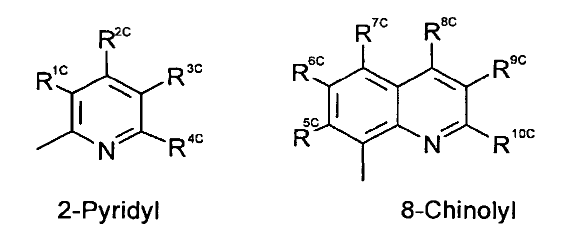 wobei
R^{1C}-R^{10C} unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{11C}₃ bedeutet, wobei die organischen Reste R^{1C}-R^{10C} auch durch Halogene substituiert sein können und je zwei vicinale Reste R^{1C}-R^{10C} auch zu einem fünf- oder sechsgliedrigen Ring verbunden sein können und
R^{11C} unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest
bedeutet und je zwei Reste R^{11C} auch zu einem fünf- oder sechsgliedrigen Ring verbunden sein können, ist.

7. Verwendung des Verfahrens nach einem der Ansprüche 1 bis 4, **dadurch gekennzeichnet, dass** der Metallkomplex A) aus der Gruppe 6 oder 7 des Periodensystems ist und einen Liganden der allgemeinen Formel F-XIX hat
worin 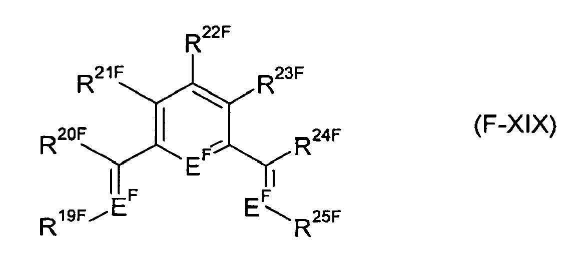
E^{F} N oder P
R^{19F} und R^{25F} unabhängig voneinander C₂-C₂₀-Alkenyl, C₆-C₂₀-Aryl, Alkylaryl mit 1 bis 10 C-Atomen im Alkylrest und 6-20 C-Atomen im Arylrest , wobei die organischen Reste R^{19F} und R^{25F} auch durch Halogene substituiert sein können,
R^{20F}-R^{24F} unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{26F}₃ bedeutet, wobei die organischen Reste R^{20F}-R^{24F} auch durch Halogene substituiert sein können und je zwei vicinale Reste R^{20F}-R^{24F} auch zu einem fünf- oder sechsgliedrigen Ring verbunden sein können und
R^{26F} unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{26F} auch zu einem fünf- oder sechsgliedrigen Ring verbunden sein können.

## Claims

1. The use of the process for the polymerization of olefins in the presence of a catalyst system comprising
A) a metal complex of group 3, 4, 5, 6, 7, 8, 9 or 10 of the Periodic Table comprising at least one group C=E or a heteroaromatic ring system comprising at least one atom from the group consisting of N, P, O and S, in which E or at least one atom from the group consisting of N, P, O and S in the heteroaromatic ring system is bound directly to the metal in the metal complex, where
E is NR¹, PR¹, O or S,
R¹ is C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, SiR²₃, where the organic radical R¹ may also be substituted by halogens, and
R² are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part and two radicals R² may also be joined to form a five- or six-membered ring,
B) optionally an organic or inorganic support,
C) one or more cation-forming compounds and
D) optionally one or more metal compounds of group 13 of the Periodic Table,
wherein the catalyst system is reacted with a compound of the formula F-I
M¹(R³)ᵣA(R⁴)ₛA (F-I)
where
M¹ is Li, Na, K, Be, Mg, Ca, Sr, Ba or Zn,
R³ is C₁-C₂₀-alkyl, C₂-C₂₀-alkenyl, C₆-C₂₀-aryl, alkylaryl having from 1 to 10 carbon atoms in the alkyl part and 6 to 20 carbon atoms in the aryl part,
R⁴ is hydrogen, halogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part or alkoxy having from 1 to 10 carbon atoms in the alkyl part and 6-20 carbon atoms in the aryl part,
r^{A} is 1 or 2
and
s^{A} is 0 or 1, where the sum r^{A}+s^{A} corresponds to the valence of M¹,
for controlling the width of the molar mass distribution M_{w}/Mₙ and/or the comonomer incorporation behavior.

2. The use of the process according to claim 1, wherein, in the metal complex A), E or at least one atom from the group consisting of N, P, O and S in the heteroaromatic ring system is bound directly to the metal in the metal complex.

3. The use of the process according to claim 1 or 2, wherein the metal complex A) is reacted with the compound of the formula F-I during the polymerization.

4. The use of the process according to any of claims 1 to 3, wherein M¹ in the compound of the formula F-I is lithium.

5. The use of the process according to any of claims 1 to 4, wherein the metal complex A) has the formula (Cp) (-Zₘ-A) MXₖ, where the variables have the following meanings:
Cp is a cyclopentadienyl system,
Z is a divalent bridge between A and Cp,
A is C=NR⁵ or an unsubstituted, substituted or fused, heteroaromatic ring system,
M is a metal of group 3, 4, 5 or 6 of the Periodic Table,
X are each, independently of one another, fluorine, chlorine, bromine, iodine, hydrogen, C₁-C₁₀-alkyl, C₂-C₁₀-alkenyl, C₆-C₂₀-aryl, alkylaryl having 1-10 carbon atoms in the alkyl part and 6-20 carbon atoms in the aryl part, NR⁶R⁷, OR⁶, SR⁶, SO₃R⁶, OC(O)R⁸, BF₄⁻, PF₆⁻ or a bulky noncoordinating anion,
R⁵-R⁷ are each, independently of one another, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, SiR⁸₃, where the organic radicals R⁵-R⁷ may also be substituted by halogens and two radicals R⁵-R⁷ may also be joined to form a five- or six-membered ring,
R⁸ are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part and two radicals R⁸ may also be joined to form a five- or six-membered ring,
k is 1, 2 or 3 and
m is 1, or may also be 0 when A is a heteroaromatic ring system.

6. The use of the process according to claim 5, wherein, in the metal complex A) of the formula (Cp) (-Zₘ-A) MXₖ, A is selected from the group consisting of 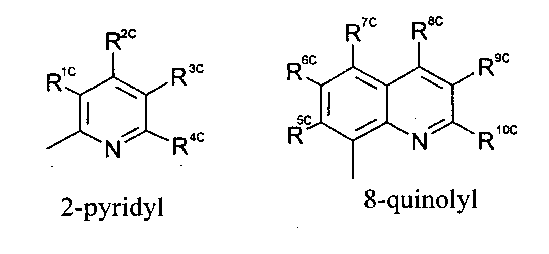 where
R^{1C}-R^{10C} are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part or SiR^{11C}₃, where the organic radicals R^{1C}-R^{10C} may also be substituted by halogens and two vicinal radicals R^{1C}-R^{10C} may also be joined to form a five- or six-membered ring and
R^{11C} are each, independently of one another, hydrogen, C₁-C₂₀-alkyl, C₂-C₂₀-alkenyl, C₆-C₂₀-aryl or alkylaryl having from 1 to 10 carbon atoms in the alkyl part and 6-20 carbon atoms in the aryl part and two radicals R^{11C} may also be joined to form a five- or six-membered ring.

7. The use of the process according to any of claims 1 to 4, wherein the metal complex A) is from group 6 or 7 of the Periodic Table and has a ligand of the formula F-XIX 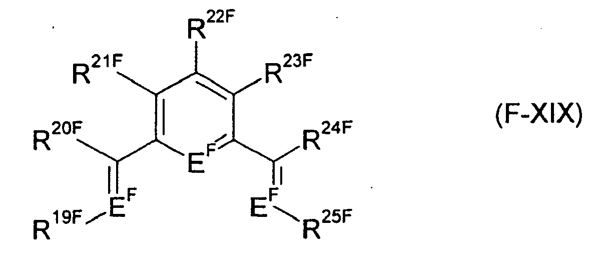 where
E^{F} is N or P,
R^{19F} and R^{25F} are each, independently of one another, C₂-C₂₀-alkenyl, C₆-C₂₀-aryl, alkylaryl having from 1 to 10 carbon atoms in the alkyl part and 6-20 carbon atoms in the aryl part, where the organic radicals R^{19F} and R^{25F} may also be substituted by halogens,
R^{20F}-R^{24F} are each, independently of one another, hydrogen, C₁-C₂₀-alkyl, C₂-C₂₀-alkenyl, C₆-C₂₀-aryl, alkyl-aryl having from 1 to 10 carbon atoms in the alkyl part and 6-20 carbon atoms in the aryl part or SiR^{26F}₃, where the organic radicals R^{20F}-R^{24F} may also be substituted by halogens and two vicinal radicals R^{20F}-R^{24F} may also be joined to form a five- or six-membered ring and
R^{26F} are each, independently of one another, hydrogen, C₁-C₂₀-alkyl, C₂-C₂₀-alkenyl, C₆-C₂₀-aryl or alkyl-aryl having from 1 to 10 carbon atoms in the alkyl radical and 6-20 carbon atoms in the aryl radical and two radicals R^{26F} may also be joined to form a five- or six-membered ring.

## Revendications

1. Utilisation du procédé de polymérisation d'oléfines en présence d'un système de catalyseur contenant
A) un complexe métallique des groupes 3, 4, 5, 6, 7, 8, 9 ou 10 du système périodique, contenant au moins un groupe C=E ou un système cyclique hétéroaromatique, contenant au moins un atome des groupes N, P, O ou S, où E ou au moins un atome des groupes N, P, O ou S du système cyclique hétéroaromatique est lié directement au métal du complexe métallique, où
E représente NR¹, PR¹, O ou S,
R¹ représente C₁-C₂₀-alkyle, C₂-C₂₀-alcényle, C₀-C₂₀-aryle, alkylaryle comprenant 1 à 10 atomes de carbone dans le radical alkyle et 6-20 atomes de carbone dans le radical aryle, SiR²₃, où le radical organique R¹ peut également être substitué par des halogènes et
R² représente, indépendamment l'un de l'autre, hydrogène, C₁-C₂₀-alkyle, C₂-C₂₀-alcényle, C₆-C₂₀-aryle, alkylaryle comprenant 1 à 10 atomes de carbone dans le radical alkyle et 6-20 atomes de carbone dans le radical aryle et à chaque fois deux radicaux R² peuvent également être reliés en un cycle de cinq ou six chaînons,
B) éventuellement un support organique ou inorganique,
C) un ou plusieurs composés formant des cations et
D) éventuellement un ou plusieurs composés métalliques du groupe 13 du système périodique,
**caractérisée en ce que** le système de catalyseur est transformé avec un composé de formule F-I
M¹(R³)ᵣ^{A}(R⁴)ₛ^{A} (F-I)
dans laquelle
M¹ signifie Li, Na, K, Be, Mg, Ca, Sr, Ba ou Zn,
R³ signifie C₁-C₂₀-alkyle, C₂-C₂₀-alcényle, C₆-C₂₀-aryle, alkylaryle comprenant 1 à 10 atomes de carbone dans le radical alkyle et 6-20 atomes de carbone dans le radical aryle
R⁴ représente hydrogène, halogène, C₁-C₂₀-alkyle, C₂-C₂₀-alcényle, C₆-C₂₀-aryle, alkylaryle comprenant 1 à 10 atomes de carbone dans le radical alkyle et 6-20 atomes de carbone dans le radical aryle ou alcoxy comprenant à chaque fois 1 à 10 atomes de carbone dans le radical alkyle,
r^{A} signifie un nombre entier de 1 à 2,
et
s^{A} signifie un nombre parmi 0 ou 1, où la somme r^{A}+s^{A} correspond à la valence de M¹,
pour le contrôle de la largeur de la répartition des masses molaires Mw/Mn et/ou du comportement d'incorporation des comonomères.

2. Utilisation du procédé selon la revendication 1, **caractérisée en ce que** dans le complexe métallique A) E ou au moins un atome des groupes N, P, O ou S du système cyclique hétéroaromatique est lié directement au métal dans le complexe métallique.

3. Utilisation du procédé selon la revendication 1 ou 2, **caractérisée en ce que** le complexe métallique A) est transformé pendant la polymérisation avec le composé de formule F-I.

4. Utilisation du procédé selon l'une quelconque des revendications 1 à 3, **caractérisée en ce que** M¹ dans le composé de formule F-I est le lithium.

5. Utilisation du procédé selon l'une quelconque des revendications 1 à 4, **caractérisée en ce que** le complexe métallique A) présente la formule générale (Cp)(-Zₘ-A)MXₖ, où les variables ont la signification suivants :
Cp un système de type cyclopentadiényle
Z un pont divalent entre A et Cp
A C=NR⁵, ou un système cyclique non substitué, substitué ou condensé, hétéroaromatique,
M un métal des groupes 3, 4, 5 ou 6 du système périodique
X indépendamment l'un de l'autre, fluor, chlore, brome, iode, hydrogène, C₁-C₁₀-alkyle, C₂-C₁₀-alcényle, C₆-C₂₀-aryle, alkylaryle comprenant 1-10 atomes de carbone dans le radical alkyle et 6-20 atomes de carbone dans le radical aryle, NR⁶R⁷, OR⁶ SR⁶, SO₃R⁶, OC (O) R⁸, BF₄⁻, PF₆⁻, ou des anions non coordinants encombrants,
R⁵- R⁷ indépendamment l'un de l'autre, hydrogène, C₁-C₂₀-alkyle, C₂-C₂₀-alcényle, C₆-C₂₀-aryle, alkylaryle comprenant 1 à 10 atomes de carbone dans le radical alkyle et 6-20 atomes de carbone dans le radical aryle, SiR⁸₃, où les radicaux organiques R⁵-R⁷ peuvent également être substitués par des halogènes et à chaque fois deux radicaux R⁵-R⁷ peuvent également être reliés en un cycle de cinq ou six chaînons,
R⁸ représente, indépendamment l'un de l'autre, hydrogène, C₁-C₂₀-alkyle, C₂-C₂₀-alcényle, C₆-C₂₀-aryle, alkylaryle comprenant 1 à 10 atomes de carbone dans le radical alkyle et 6-20 atomes de carbone dans le radical aryle et à chaque fois deux radicaux R⁸ peuvent également être reliés en un cycle de cinq ou six chaînons,
k vaut 1, 2, ou 3 et
m vaut 1, ou lorsque A représente un système cyclique hétéroaromatique, il peut également valoir 0.

6. Utilisation du procédé selon la revendication 5, **caractérisée en ce que** dans le complexe métallique
A) de formule générale (Cp) (-Zₘ-A) MXₖ, A est choisi dans le groupe 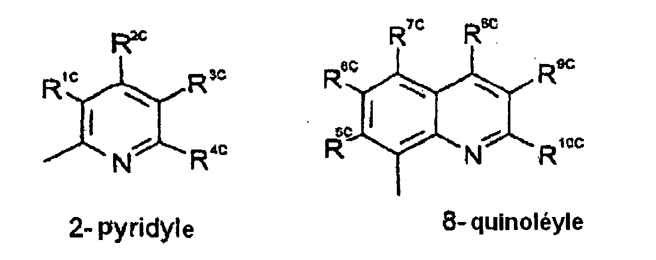 où
R^{1C}-R^{10C} représentent indépendamment l'un de l'autre hydrogène, C₁-C₂₀-alkyle, C₂-C₂₀-alcényle, C₆-C₂₀-aryle, alkylaryle comprenant 1 à 10 atomes de carbone dans le radical alkyle et 6-20 atomes de carbone dans le radical aryle ou SiR^{11C}₃, où les radicaux organiques R^{1C}-R^{10C} peuvent également être substitués par des halogènes et à chaque fois deux radicaux R^{1C}-R^{10C} vicinaux peuvent également être reliés en un cycle de cinq ou six chaînons,
R^{11C} représente, indépendamment l'un de l'autre, hydrogène, C₁-C₂₀-alkyle, C₂-C₂₀-alcényle, C₆-C₂₀-aryle ou alkylaryle comprenant 1 à 10 atomes de carbone dans le radical alkyle et 6-20 atomes de carbone dans le radical aryle et à chaque fois deux radicaux R^{11C} peuvent également être reliés en un cycle de cinq ou six chaînons.

7. Utilisation du procédé selon l'une quelconque des revendications 1 à 4, **caractérisée en ce que** le complexe métallique A) est du groupe 6 ou 7 du système périodique et présente un ligand de formule générale F-XIX 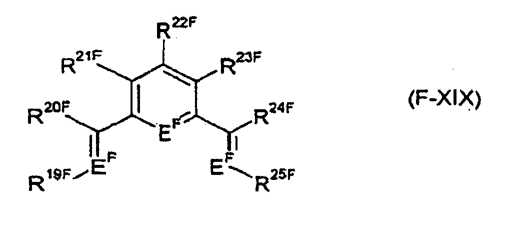 où
E^{F} représente N ou P
R^{19F} et R^{25F} représentent, indépendamment l'un de l'autre, C₂-C₂₀-alcényle, C₆-C₂₀-aryle, alkylaryle comprenant 1 à 10 atomes de carbone dans le radical alkyle et 6-20 atomes de carbone dans le radical aryle, où les radicaux organiques R^{19F} et R^{25F} peuvent également être substitués par des halogènes,
R^{20F}-R^{24F} représentent indépendamment l'un de l'autre hydrogène, C₁-C₂₀-alkyle, C₂-C₂₀-alcényle, C₆-C₂₀-aryle, alkylaryle comprenant 1 à 10 atomes de carbone dans le radical alkyle et 6-20 atomes de carbone dans le radical aryle ou SiR^{26F}₃, où les radicaux organiques R^{20F}-R^{24F} peuvent également être substitués par des halogènes et à chaque fois deux radicaux R^{20F}-R^{24F} vicinaux peuvent également être reliés en un cycle de cinq ou six chaînons,
R^{26F} représente, indépendamment l'un de l'autre, hydrogène, C₁-C₂₀-alkyle, C₂-C₂₀-alcényle, C₆-C₂₀-aryle ou alkylaryle comprenant 1 à 10 atomes de carbone dans le radical alkyle et 6-20 atomes de carbone dans le radical aryle et à chaque fois deux radicaux R^{26F} peuvent également être reliés en un cycle de cinq ou six chaînons.
